# EUROPEAN PATENT APPLICATION

(11) **EP 4 554 250 A1**
(43) Date of publication of application: **14.05.2025**
(21) Application number: 23881653.2
(22) Date of filing: 12.10.2023
(51) Int. Cl.: H04N 23/951

(54) **METHOD FOR PHOTOGRAPHING MOON AND ELECTRONIC DEVICE**

(30) Priority: 29.10.2022 CN 202211340119
(71) Applicant: Huawei Technologies Co., Ltd., Shenzhen, Guangdong 518129 (CN)
(72) Inventor: KONG, Desong, Shenzhen, Guangdong 518129 (CN); SUN, Tao, Shenzhen, Guangdong 518129 (CN); QIAN, Kang, Shenzhen, Guangdong 518129 (CN); WANG, Miaofeng, Shenzhen, Guangdong 518129 (CN); ZHANG, Xi, Shenzhen, Guangdong 518129 (CN); AO, Huanhuan, Shenzhen, Guangdong 518129 (CN)
(74) Representative: Körber, Martin Hans
(86) International application number: PCT/CN2023/124312
(87) International publication number: WO 2024/088074

(57) **Abstract**

Embodiments of this application provide a moon photographing method and an electronic device. The method may include: displaying a preview display interface of a camera, where the preview display interface includes a first zoom ratio control; when it is determined that a photographing scene is a moon scene, displaying, on a primary preview display interface of the preview display interface, a moon image obtained by a long-focus lens, and displaying, on an auxiliary preview display interface of the preview display interface, a wide-angle image obtained by a wide-angle lens; when it is determined that a first zoom ratio is greater than or equal to a first preset ratio, in response to a first photographing operation of a user, obtaining, by using the long-focus lens, a first moon image based on the first zoom ratio and a first exposure parameter, and obtaining a first foreground image based on a second exposure parameter; and fusing the first moon image and the first foreground image to obtain a first target image. In this application, the beautiful moon and a clear foreground can be photographed in a moon photographing scenario, presenting a beautiful image to the user.

## Description

### TECHNICAL FIELD

Embodiments of this application relate to the field of electronic technologies, and more specifically, to a moon photographing method and an electronic device.

### BACKGROUND

When a user uses an electronic device to take a photo, the moon is often used as a photographed subject. When photographing the moon, the electronic device generally uses a low exposure to restore moon overexposure, then uses a high dynamic range imaging (high dynamic range imaging, HDR) technology to obtain a moon image with a high signal-to-noise ratio, and finally uses an algorithm to improve moon resolution, to obtain a clear moon image.

However, the moon image includes only the clear moon, and a foreground area is basically invisible, affecting beauty of the entire moon image.

### SUMMARY

Embodiments of this application provide a moon photographing method and an electronic device. In the technical solution, in a moon photographing scenario, the beautiful moon and a clear foreground can be photographed, presenting a beautiful image to a user.

According to a first aspect, a moon photographing method is provided. The method is applied to an electronic device, the electronic device includes a wide-angle lens and a long-focus lens, and the method includes: The electronic device displays a preview display interface of a camera, where the preview display interface includes a first zoom ratio control, and the first zoom ratio control is used to control a first zoom ratio of the long-focus lens; when the electronic device determines that a photographing scene is a moon scene, the electronic device displays, on a primary preview display interface of the preview display interface, a moon image obtained by the long-focus lens, and displays, on an auxiliary preview display interface of the preview display interface, a wide-angle image obtained by the wide-angle lens; when the electronic device determines that the first zoom ratio is greater than or equal to a first preset ratio, in response to a first photographing operation of a user, the electronic device obtains, by using the long-focus lens, a first moon image based on the first zoom ratio and a first exposure parameter, and obtains a first foreground image based on a second exposure parameter; and the electronic device fuses the first moon image and the first foreground image, to obtain a first target image.

In this embodiment of this application, when the electronic device determines to photograph the moon, the electronic device may display, on the primary preview display interface of the camera, the moon image obtained by the long-focus lens, and display, on the auxiliary preview display interface in a picture-in-picture manner, the image obtained by the wide-angle lens. Therefore, when photographing the moon, the user may perform composition on the moon based on the foreground image. This is more helpful for the user to take a photo of the moon with harmonious composition. In addition, when it is determined that the zoom ratio of the electronic device is greater than or equal to the first preset ratio, in a photographing phase, the electronic device obtains the moon image by using the long-focus lens based on a high exposure parameter, obtains the foreground image based on a low exposure parameter, and fuses the moon image and the foreground image to obtain the final target image. This helps the user take a photo of a clear moon subject and foreground scenery.

With reference to the first aspect, in an implementation of the first aspect, the preview display interface further includes a second zoom ratio control, and the second zoom ratio control is used to control a second zoom ratio for additionally zooming in the moon based on the first zoom ratio. The displaying, on a primary preview display interface of the preview display interface, a moon image obtained by the long-focus lens includes: displaying, on the primary preview display interface, the first moon image that is zoomed in based on the second zoom ratio.

That the electronic device fuses the first moon image and the first foreground image includes: The electronic device fuses the first foreground image and the first moon image that is zoomed in based on the second zoom ratio.

In this embodiment of this application, the preview display interface of the camera may further include the second zoom ratio control used to control to zoom in the moon subject based on the first zoom ratio. The moon subject in the primary preview display interface may be zoomed in based on the second zoom ratio. In the photographing phase, the electronic device may fuse the foreground image and the moon image that is zoomed in based on the second zoom ratio, to obtain a final image. In this technical solution, the user can flexibly adjust a size of the moon subject in a same foreground, to help improve flexibility of photographing the moon.

With reference to the first aspect, in an implementation of the first aspect, when the electronic device detects that the user adjusts the first zoom ratio to be less than the first preset ratio, the method further includes: In response to a second photographing operation of the user, the electronic device obtains, by using the long-focus lens, a second moon image based on the first zoom ratio, and obtains a first wide-angle image by using the wide-angle lens; and the electronic device fuses the first wide-angle image and the second moon image that is zoomed in based on the second zoom ratio, to obtain a second target image.

In this embodiment of this application, at a high zoom ratio, because definition of the wide-angle lens is poor, an obtained foreground image may be blurry, and is lower than definition of the foreground image obtained by the long-focus lens. Therefore, the foreground image obtained by using the long-focus lens and the moon image obtained by the long-focus lens are fused to obtain a target image in which both the moon subject and the foreground are clear and visible. When the electronic device switches the zoom ratio to a low zoom ratio, the wide-angle image obtained by the wide-angle lens has a larger size and high definition. The moon image obtained by the long-focus lens and the wide-angle image obtained by the wide-angle lens are fused, so that a foreground is beautiful and the moon is clear. In this way, a fusion solution in an all-focus segment can be implemented.

With reference to the first aspect, in an implementation of the first aspect, the wide-angle image further includes a first display frame, and the first display frame indicates a framing size of the first target image.

In this embodiment of this application, the first display frame is used, so that the user can determine a size of an image obtained by the long-focus lens. This helps the user perform composition on the moon.

With reference to the first aspect, in an implementation of the first aspect, the method further includes: In response to an operation of tapping the wide-angle image or a switch button by the user, the electronic device displays, on the auxiliary preview display interface, the moon image obtained by the long-focus lens, and displays the wide-angle image on the primary preview display interface.

In this embodiment of this application, the electronic device may support exchange of preview display positions of the display interface of the moon image obtained by the long-focus lens and the display interface of the wide-angle image obtained by the wide-angle lens, so that the user can flexibly switch a preview display interface of the lens when photographing the moon by using the electronic device.

With reference to the first aspect, in an implementation of the first aspect, before the electronic device fuses the first moon image and the first foreground image, the method further includes: The electronic device obtains center points of a moon area in the first moon image and a moon area in the first foreground image; and the electronic device performs moon alignment on the moon area in the first moon image and the moon area in the first foreground image based on the center points of the moon areas.

In this embodiment of this application, moon alignment may be performed after image fusion, so that a moon area in a finally obtained image is clearer.

With reference to the first aspect, in an implementation of the first aspect, the method further includes: After fusing the first moon image and the first foreground image, the electronic device performs suppression on a lens flare of the moon in a fused image.

In this embodiment of this application, because there is a strong lens flare around the moon, the lens flare may be processed in a manner like filtering or an AI algorithm, so that the lens flare of the moon is natural.

With reference to the first aspect, in an implementation of the first aspect, the displaying, on a primary preview display interface of the preview display interface, a moon image obtained by the long-focus lens, and displaying, on an auxiliary preview display interface of the preview display interface, a wide-angle image obtained by a wide-angle lens includes: The electronic device performs distribution statistics collection on brightness values of the first foreground image, to obtain a first brightness value; and displays silhouette effect of an object other than the moon in the first foreground image when it is determined that the first brightness value is less than a preset brightness value.

In this embodiment of this application, when the foreground includes a small quantity of objects, if foreground brightness is forcibly increased, display effect is poor. In this embodiment of this application, the foreground brightness is not improved, but the objects in the foreground are displayed as silhouette effect, so that a finally obtained image has an artistic aesthetic sense.

With reference to the first aspect, in an implementation of the first aspect, an object other than the moon in the first target image is displayed as silhouette effect.

According to a second aspect, an electronic device is provided, including one or more processors and one or more memories. The one or more memories store one or more computer programs. The one or more computer programs include instructions. When the instructions are executed by the one or more processors, the moon photographing method according to the first aspect and any possible implementation of the first aspect is performed.

According to a third aspect, a moon photographing apparatus is provided, including a module configured to implement the moon photographing method according to the first aspect and any possible implementation of the first aspect.

According to a fourth aspect, a chip is provided. The chip includes a processor and a communication interface. The communication interface is configured to receive a signal and transmit the signal to the processor. The processor processes the signal, so that the moon photographing method according to the first aspect and any possible implementation of the first aspect is performed.

According to a fifth aspect, a computer-readable storage medium is provided, where the computer-readable storage medium stores computer instructions, and when the computer instructions are run on a computer, the moon photographing method according to the first aspect and any possible implementation of the first aspect is performed.

According to a sixth aspect, a computer program product is provided, where the computer program product includes computer program code, and when the computer program code is run on a computer, the moon photographing method according to the first aspect and any possible implementation of the first aspect is performed.

### BRIEF DESCRIPTION OF DRAWINGS

FIG. 1 is a diagram of a hardware structure of an electronic device according to an embodiment of this application;
FIG. 2 is a diagram of a software structure of an electronic device according to an embodiment of this application;
FIG. 3(a) to FIG. 3(d) are a diagram of a group of GUIs according to an embodiment of this application;
FIG. 4 is a schematic flowchart of a moon photographing method according to an embodiment of this application;
FIG. 5(a) to FIG. 5(d) are a diagram of another group of GUIs according to an embodiment of this application;
FIG. 6(a) to FIG. 6(d) are a diagram of another group of GUIs according to an embodiment of this application;
FIG. 7 is a schematic flowchart of a moon photographing method according to an embodiment of this application;
FIG. 8 is an example flowchart of a photographing phase according to an embodiment of this application;
FIG. 9(a) to FIG. 9(c) are a diagram of another group of GUIs according to an embodiment of this application;
FIG. 10 is a schematic flowchart of a moon photographing method according to an embodiment of this application;
FIG. 11 is an example flowchart of a photographing phase in FIG. 9(a) to FIG. 9(c);
FIG. 12(a) to FIG. 12(d) are a diagram of another group of GUIs according to an embodiment of this application; and
FIG. 13 is a schematic flowchart of a moon photographing method according to an embodiment of this application.

### DESCRIPTION OF EMBODIMENTS

The following describes the technical solution of embodiments in this application with reference to accompanying drawings.

A display method in embodiments of this application may be applied to an electronic device like a smartphone, a tablet computer, a notebook computer, a personal computer (personal computer, PC), an ultra-mobile personal computer (ultra-mobile personal computer, UMPC), a netbook, a personal digital assistant (personal digital assistant, PDA), a vehicle-mounted device, a wearable device, or a foldable device.

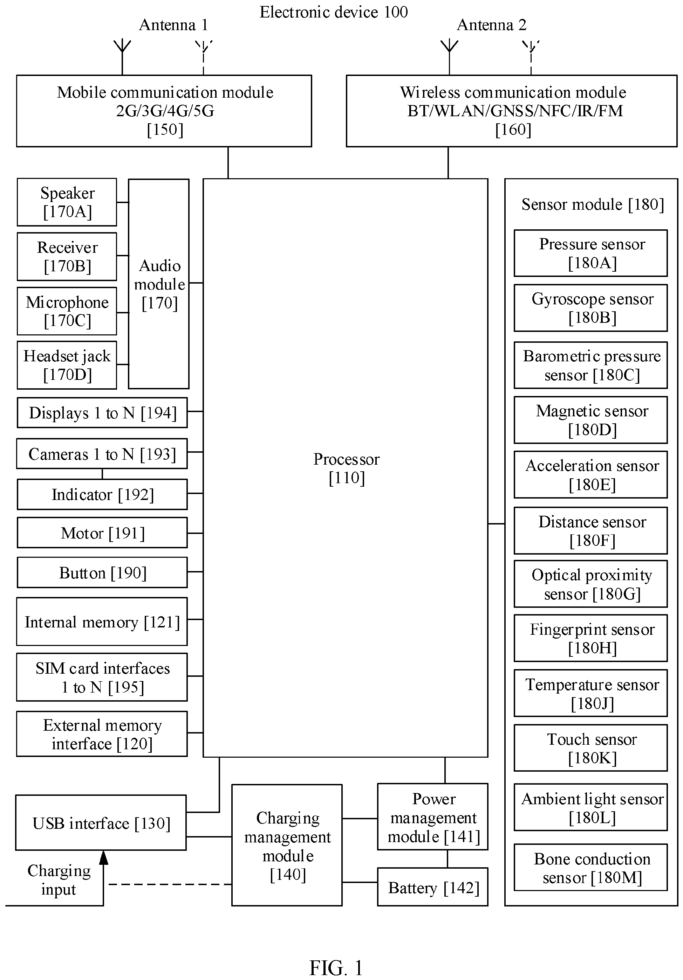

FIG. 1 is a schematic diagram of a structure of the electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be separate components, or may be integrated into one or more processors.

The controller may be a nerve center and a command center of the electronic device 100. The controller may generate an operation control signal based on instruction operation code and a timing signal, and complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes one serial data line (serial data line, SDA) and one serial clock line (serial clock line, SCL).

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be used for audio communication, to sample, quantize, and code an analog signal. In some embodiments, the audio module 170 may be coupled to the wireless communication module 160 through a PCM bus interface.

The UART interface is a universal serial data bus, and is used for asynchronous communication. The bus may be a bidirectional communication bus. The bus converts to-be-transmitted data between serial communication and parallel communication. In some embodiments, the UART interface is usually configured to connect the processor 110 and the wireless communication module 160.

The MIPI interface may be configured to connect the processor 110 to peripheral devices such as the display 194 and the camera 193.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, may be configured to transmit data between the electronic device 100 and a peripheral device.

It may be understood that an interface connection relationship between the modules shown in this embodiment of this application is merely an example for description, and does not constitute a structural limitation on the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device 100. The charging management module 140 may supply power to the electronic device by using the power management module 141 while charging the battery 142.

The power management module 141 is configured to connect to the battery 142, the charging management module 140, and the processor 110.

A wireless communication function of the electronic device 100 may be implemented by using the antenna 1, the antenna 2, the mobile communication module 150, the wireless communication module 160, the modem processor, the baseband processor, and the like.

The mobile communication module 150 may provide a solution that is applied to the electronic device 100 and that includes wireless communication such as 2G/3G/4G/5G.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the electronic device 100 and that includes wireless communication such as a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, and an infrared (infrared, IR) technology.

In some embodiments, the antenna 1 of the electronic device 100 is coupled to the mobile communication module 150, and the antenna 2 is coupled to the wireless communication module 160, so that the electronic device 100 can communicate with a network and another device through a wireless communication technology.

The electronic device 100 implements a display function by using the GPU, the display 194, the application processor, and the like. The GPU is a microprocessor for image processing, and is connected to the display 194 and the application processor. The GPU is configured to perform mathematical and geometric calculation for graphics rendering. The processor 110 may include one or more GPUs that execute program instructions to generate or change display information.

The display 194 is configured to display an image, a video, and the like. The display 194 includes a display panel. The display panel may be a display panel made of one of materials such as a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), and the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. The camera 193 is configured to capture a static image or a video.

The digital signal processor is configured to process a digital signal, and may further process another digital signal in addition to a digital image signal.

The video codec is configured to compress or decompress a digital video. The electronic device 100 may support one or more video codecs.

The external memory interface 120 may be configured to connect to an external memory card, for example, a micro SD card, to extend a storage capability of the electronic device 100.

The internal memory 121 may be configured to store computer-executable program code, where the executable program code includes instructions. The processor 110 runs the instructions stored in the internal memory 121, to perform various function applications and data processing of the electronic device 100.

The electronic device 100 may implement an audio function by using the audio module 170, the speaker 170A, the receiver 170B, the microphone 170C, the headset jack 170D, the application processor, and the like. For example, playing music, and recording.

The audio module 170 is configured to convert a digital audio signal into an analog audio signal for output, and is also configured to convert an analog audio input into a digital audio signal.

The speaker 170A, also referred to as a "horn", is configured to convert an audio electrical signal into a sound signal.

The receiver 170B, also referred to as an "earpiece", is configured to convert an audio electrical signal into a sound signal.

The microphone 170C, also referred to as a "mike" or a "voice tube", is configured to convert a sound signal into an electrical signal.

The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194.

The gyroscope sensor 180B may be configured to determine a motion posture of the electronic device 100.

The barometric pressure sensor 180C is configured to measure barometric pressure. In some embodiments, the electronic device 100 calculates an altitude through the barometric pressure measured by the barometric pressure sensor 180C, to assist in positioning and navigation.

The acceleration sensor 180E may detect accelerations in various directions (usually on three axes) of the electronic device 100.

The distance sensor 180F is configured to measure a distance.

The fingerprint sensor 180H is configured to collect a fingerprint.

The touch sensor 180K is also referred to as a "touch panel". The touch sensor 180K may be disposed on the display 194. The touch sensor 180K and the display 194 constitute a touchscreen, which is also referred to as a "touch screen".

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like.

The motor 191 may generate a vibration prompt.

The indicator 192 may be an indicator light, and may be configured to indicate a charging state and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. In this embodiment of this application, an operating system with a layered architecture is used as an example to describe a software structure of the electronic device 100.

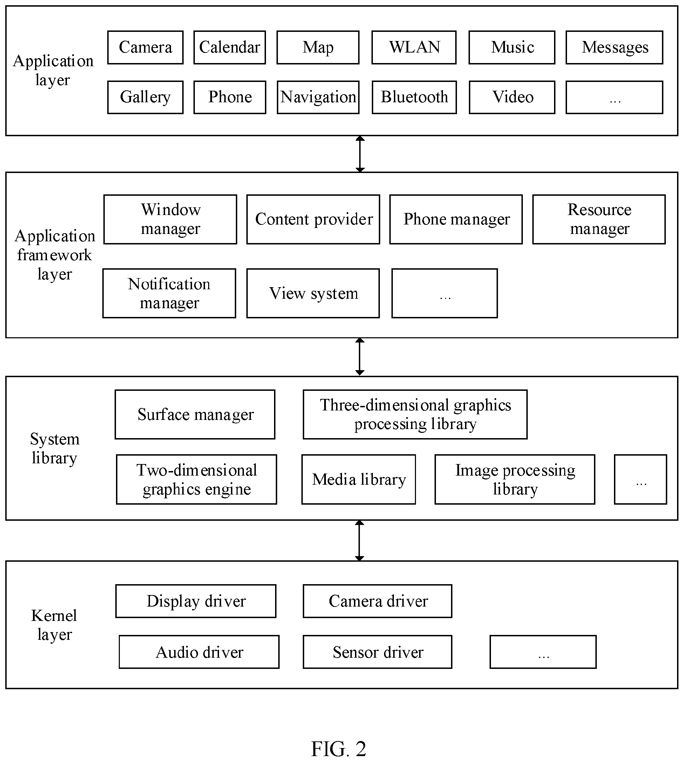

FIG. 2 is a block diagram of the software structure of the electronic device 100 according to an embodiment of this application. The layered architecture divides software into layers, and each layer has a clear role and responsibility. The layers communicate with each other through software interfaces. In some embodiments, the operating system is classified into four layers that are respectively an application layer, an application framework layer, a system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, Messages, and Wallet.

The application framework layer provides an application programming interface (application programming interface, API) and a programming framework for the application at the application layer. The application framework layer includes some predefined functions.

As shown in FIG. 2, the application framework layer may include a window manager, a content provider, a view system, a phone manager, a resource manager, a notification manager, and the like.

The window manager is used to manage a window program. The window manager can obtain a size of a display, determine whether there is a status bar, lock a screen, and capture a screen.

The content provider is used to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be used to construct an application. A display interface may include one or more views, for example, include a display interface of a message notification icon, and may include a view for displaying a text and a view for displaying a picture.

The phone manager is used to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be used to convey a notification type message. The message may automatically disappear after a short pause without user interaction. For example, the notification manager is used to notify download completion, a message notification, and the like. The notification manager may alternatively be a notification that appears in a top of a status bar in a system in a form of a graph or a scroll bar text, for example, a notification of an application running on a background or a notification that appears on a screen in a form of a dialog window. For example, text information is prompted in the status bar, a prompt tone is produced, the electronic device vibrates, or an indicator light blinks.

The core library includes two parts: One part is a performance function that a java language needs to invoke, and the other part is a core library of Android.

The application layer and the application framework layer run on the virtual machine. The virtual machine executes java files of the application layer and the application framework layer as binary files. The virtual machine is used to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is used to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before technical solutions in embodiments of this application are described, some terms that may be used in this application are first briefly described.

High dynamic range imaging HDR: High dynamic range imaging is a group of technologies used to achieve a larger exposure dynamic range (namely, a larger difference between brightness and darkness) than a common digital image technology.

Wide-angle lens: A wide-angle lens has a short focal length and a large angle of view, and can photograph a large size of scenery within a short photographing distance. The focal length of the lens is short, the angle of view is wide, and a depth of field is large. Therefore, the lens is suitable for taking photos of large scenes, such as buildings and scenery.

Long-focus lens: A long-focus lens is a camera lens whose focal length is longer than that of a standard lens. The long-focus lens is usually used to take photos of long-distance subjects, for example, for ecological photography and sports photography. Because the lens is heavy and a depth of field is short, it is more likely to be out of focus due to hand shock, and a shutter requirement is high.

Lens flare: A lens flare is a blurry shadow that appears on the edge of an image due to overexposure caused when strong light is projected to a photosensitive area during photographing.

Overexposure: Overexposure means that brightness of a photo exceeds an exposure brightness range required for taking a picture.

Silhouette effect: Silhouette effect is an image with contour effect of a person, object, or another scene.

Optical zoom: Optical zoom is generated when positions of a lens, an object, and a focus change. A larger optical zoom ratio indicates a farther object that can be photographed.

Digital zoom: Digital zoom is used to increase a size of each pixel in an image by using a processor for zooming in.

When a user uses an electronic device to take a photo, the moon is often used as a photographed subject. When photographing the moon, the electronic device generally uses a low exposure to restore moon overexposure, then uses a high dynamic range imaging (high dynamic range imaging, HDR) technology to obtain a moon image with a high signal-to-noise ratio, and finally uses an algorithm to improve moon resolution, to obtain a clear moon image.

However, the moon image includes only the clear moon, and a foreground area outside the moon is basically invisible, affecting beauty of the entire moon image.

In some scenarios, for example, in the evening when the moon just rises, or in a city with a beautiful night scene, when a user photographs the moon, if a finally obtained image has only the moon but no foreground, photographing experience of the user is reduced.

In view of this, embodiments of this application provide a moon photographing method and an electronic device. In the technical solution, when the electronic device is in a low-ratio focal length, an image of a wide-angle lens and an image of a long-focus lens can be fused, and when a ratio is switched to a high ratio, images of the long-focus lens can be fused, to obtain an image with both a clear moon and a clear foreground. This improves aesthetics of a moon image taken by a user.

The following describes the moon photographing method in embodiments of this application with reference to several groups of graphical user interfaces (graphical user interfaces, GUIs).

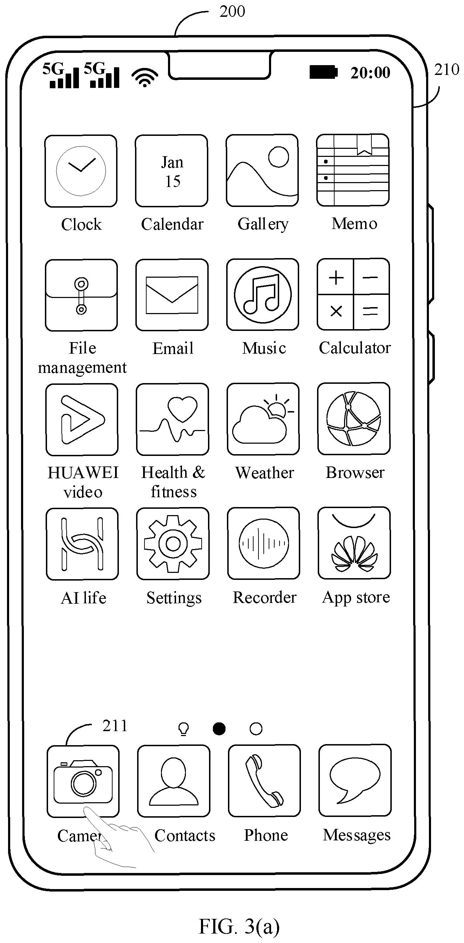

FIG. 3(a) to FIG. 3(d) are a diagram of a group of GUIs according to an embodiment of this application. Herein, FIG. 3(a) to FIG. 3(d) show a process in which a user uses a mobile phone 200 to photograph the moon.

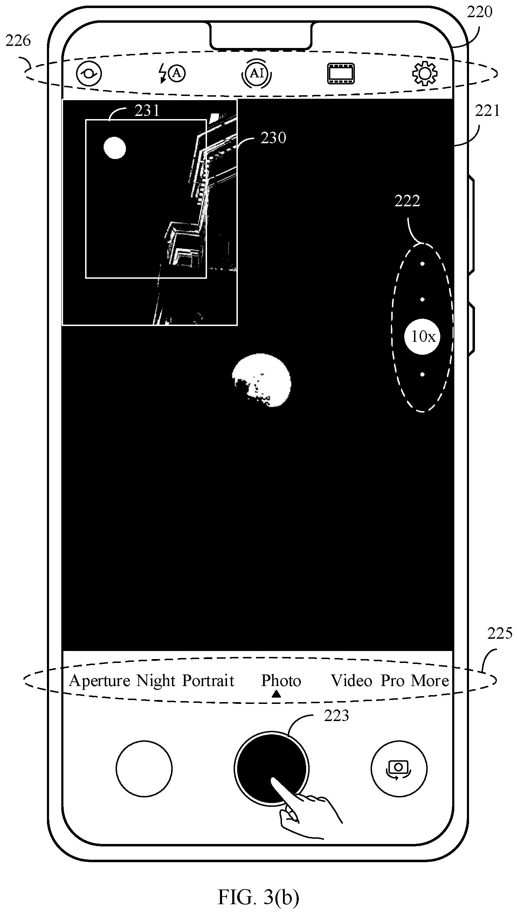

As shown in FIG. 3(a), the GUI is a display interface 210 of the mobile phone 200. The display interface 210 may include a plurality of applications installed in the mobile phone 200. After detecting an operation of tapping a camera icon 211 by the user, the mobile phone 200 may display the GUI shown in FIG. 3(b).

As shown in FIG. 3(b), the GUI is a display interface 220 of a camera whose zoom ratio is 10x. The display interface 220 may include at least a function bar 226, a primary preview display interface 221, an auxiliary preview display interface 230, a mode bar 225, a photographing control 223, and the like.

The function bar 226 may include a flash function button, an artificial intelligence (artificial intelligence, AI) photographing function button, a smart vision function button, a setting function button, and the like.

The primary preview display interface 221 may be used to display the moon photographed by a long-focus lens, and the auxiliary preview display interface 230 of a wide-angle lens and a first zoom ratio control 222 may be further displayed on an upper left corner of the primary preview display interface 221. The auxiliary preview display interface 230 may be used to display an image obtained by the wide-angle lens, and the auxiliary preview display interface 230 is displayed on the primary preview display interface 221 in a picture-in-picture manner. The auxiliary preview display interface 230 may further include a preview display interface 231 of the long-focus lens.

It should be understood that the first zoom ratio control 222 may control a converged zoom ratio of optical zoom and digital zoom of the mobile phone.

It should be understood that an area other than the preview display interface 231 of the long-focus lens in the auxiliary preview display interface 230 may be referred to as a foreground area.

It should be understood that the preview display interface 231 may further include a close button, so that the user can close the preview display interface 231 as required.

In this way, the auxiliary preview display interface 230 includes the preview display interface 231 of the long-focus lens and the foreground area, so that the user can perform composition on the moon in the primary preview display interface 231 based on the auxiliary preview display interface 230. This helps take a photo with good composition effect.

The auxiliary preview display interface 230 may be located in the upper left corner of the primary preview display interface 221. In some other examples, the auxiliary preview display interface 230 may be alternatively located in another position of the primary preview display interface 221, or the user may move the auxiliary preview display interface 230 through dragging.

In some other examples, the auxiliary preview display interface 230 is a preview display interface of an image obtained by the wide-angle lens. The preview display interface 231 included in the auxiliary preview display interface 230 is also a preview display interface of the wide-angle lens. In this case, the preview display interface 231 is a part of the auxiliary preview display interface 230. The preview display interface 231 may indicate a size of an image obtained after the user taps the photographing control. In this case, the user may complete composition of the moon based on an area of the auxiliary preview display interface 231.

In some cases, a position of a moon image displayed on the primary preview display interface and a position of an image displayed on the auxiliary preview display interface may be mutually switched. For example, after detecting an operation of tapping the preview display interface 231 or the auxiliary preview display interface 230 by the user, the mobile phone 200 may display, on the primary preview display interface of the camera, the image obtained by the wide-angle lens, and display, on the auxiliary preview display interface, the moon image obtained by the long-focus lens. This is not limited in embodiments of this application.

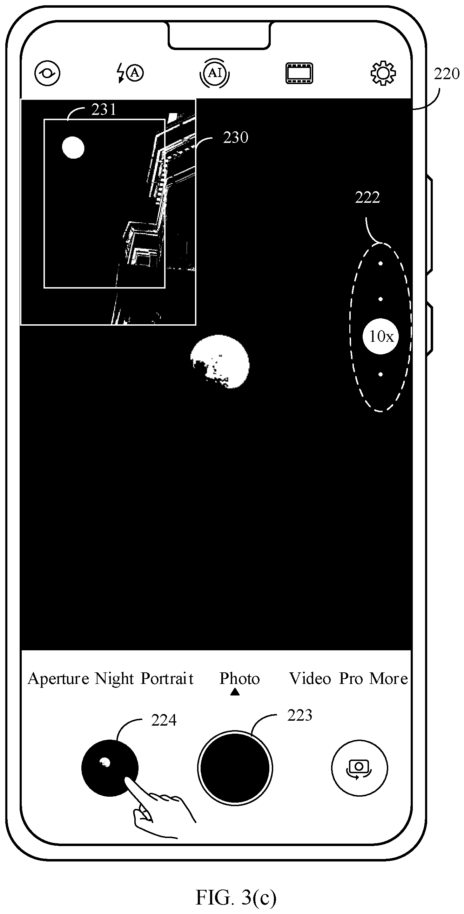

After detecting an operation of tapping the photographing control 223 by the user, the mobile phone 200 may display the GUI shown in FIG. 3(c).

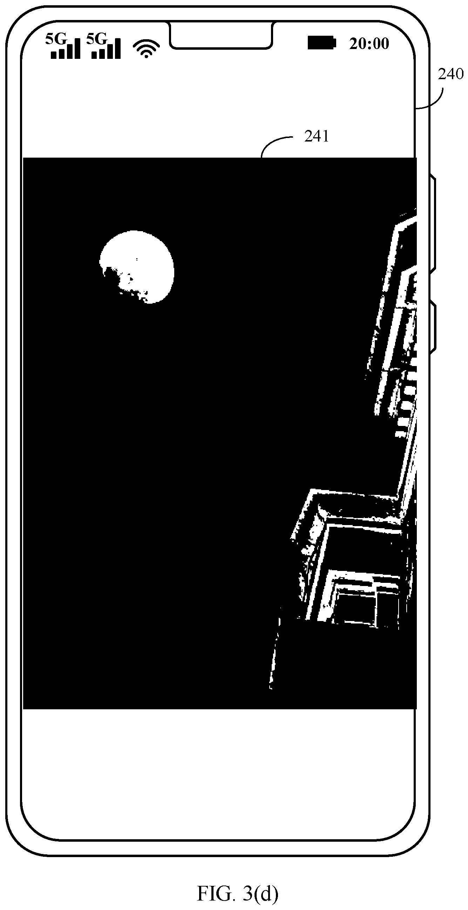

As shown in FIG. 3(c), a part of an image taken by the mobile phone may be displayed in a display control 224 on the display interface 220. After detecting an operation of tapping the display control 224 by the user, the mobile phone 200 may display the GUI shown in FIG. 3(d).

In some other examples, the user may further operate the mobile phone to exit the camera and open a gallery, and view a taken image from the gallery.

As shown in FIG. 3(d), the GUI is a display interface 240 of the mobile phone. The display interface 240 may be used to display an image 241 taken by the mobile phone. In the image 241, the moon is clear and bright, a building in a foreground is also clear and visible, and composition of the moon in the entire image is also harmonious, so that the moon image taken by the mobile phone is more beautiful.

It should be understood that content included in the image 241 is content included in the preview display interface 231. A size of an area on the preview display interface 231 is a size of a framing area of the long-focus lens.

In this embodiment of this application, when the user photographs the moon by using the mobile phone, the moon image obtained by the long-focus lens may be displayed on the primary preview display interface of the mobile phone, the image obtained by the wide-angle lens may be displayed on the auxiliary preview display interface, and the image obtained by the wide-angle lens is displayed in a picture-in-picture manner. This helps the user perform composition on the moon and the foreground, and finally take a beautiful image including the moon and the foreground.

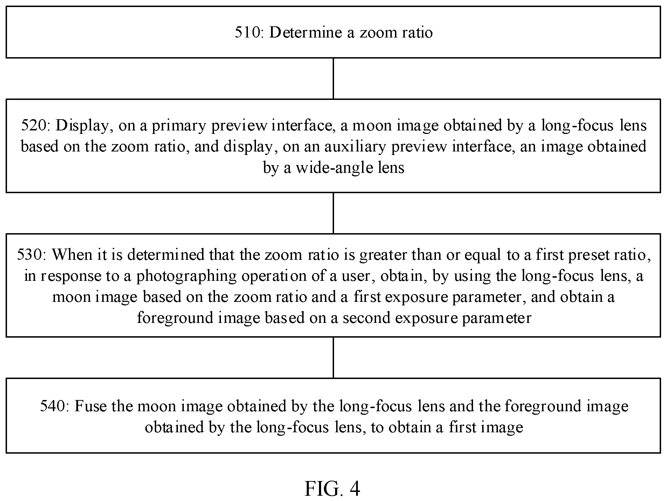

The following describes the implementation process of a moon photographing method in FIG. 3(a) to FIG. 3(d) with reference to FIG. 4.

FIG. 4 is a schematic flowchart of a moon photographing method according to an embodiment of this application. As shown in FIG. 4, the method may include step 510 to step 540.

In this embodiment of this application, the moon photographing method may include a preview phase in steps 510 and 520 and a photographing phase in steps 530 and 540.

510: Determine a zoom ratio.

For example, as shown in FIG. 3(b), a user uses a mobile phone to aim at the moon to take a photo. After opening a camera, the user selects a zoom ratio of 10x. In this case, the mobile phone may determine that the zoom ratio is 10. It should be understood that the zoom ratio may be used to control a zoom ratio of a long-focus lens.

In some examples, before step 510, the method may further include: determining to enter a moon mode.

For example, in the preview phase, the mobile phone may automatically identify the moon, to enter the moon mode. In some other examples, after the mobile phone enters the moon mode, a moon icon, text content of the moon mode, a close control, and the like may be displayed on a primary preview display interface of the camera.

520: Display, on the primary preview display interface, a moon image obtained by the long-focus lens based on the zoom ratio, and display, on an auxiliary preview display interface, an image obtained by a wide-angle lens.

It should be understood that a first preset zoom ratio may be 10, 8, or the like. A specific value of the first preset zoom ratio is not limited in embodiments of this application.

For example, as shown in FIG. 3(b), the primary preview display interface may be the primary preview display interface 221, and may be used to display the moon image obtained by the long-focus lens of the mobile phone based on the zoom ratio, and the auxiliary preview display interface may be the auxiliary preview display interface 230, and may be used to display the image obtained by the wide-angle lens of the mobile phone.

It should be understood that the auxiliary preview interface may be displayed in a picture-in-picture manner of the primary preview interface. Therefore, the user can perform composition on a final moon image based on the auxiliary preview display interface.

It should be understood that before step 520, the method may further include a focusing process.

The focusing process is a process in which distance measurement is performed on a photographed subject, and then a lens element in a lens is adjusted to form a focus, so that an image of the photographed subject on a photographing preview interface looks clearer.

In this embodiment of this application, the mobile phone may automatically perform focusing after identifying the moon, or the user may manually tap the moon on a camera interface to perform focusing. This is not limited in embodiments of this application.

It should be understood that, in the processing procedure shown in FIG. 4, the electronic device does not support additional magnification of the moon subject at a fixed zoom ratio. In other words, the camera interface of the electronic device includes only one zoom ratio control for controlling a zoom ratio of the long-focus lens.

530: When it is determined that the zoom ratio is greater than or equal to a first preset ratio, in response to a photographing operation of the user, obtain, by using the long-focus lens, a moon image based on the zoom ratio and a first exposure parameter, and obtain a foreground image based on a second exposure parameter.

A specific value of the first preset ratio is not limited in embodiments of this application. For example, the first preset ratio may be 10, 8, or the like.

For example, in response to a photographing operation of tapping a photographing control by the user, the mobile phone obtains images of a plurality of frames based on the zoom ratio by using the long-focus lens. The images of the plurality of frames include a moon image and a foreground image.

Because a main area of the moon is bright and a foreground area is dark, the long-focus lens uses a low first exposure parameter to obtain a clear image of the moon subject based on the zoom ratio, and uses a high second exposure parameter to obtain a clear and bright foreground image.

In this case, the images of the plurality of frames obtained by the long-focus lens include a foreground image of a high exposure frame and a moon image of a low exposure frame.

In some examples, the exposure parameter may include exposure time, a sensitivity value, exposure compensation, white balance, and the like.

540: Fuse the moon image obtained by the long-focus lens based on the zoom ratio and the foreground image obtained by the long-focus lens based on the zoom ratio, to obtain a first image.

For example, after obtaining the moon image of a high exposure frame and the foreground image of a low exposure frame, the long-focus lens may fuse the two images to obtain the final first image. In the first image, both the moon and the foreground are clear and bright. The following describes, with reference to a specific embodiment, a technical solution of fusing the foreground image and the moon image. Details are not described herein.

In this embodiment of this application, when photographing the moon, the mobile phone may display, on the primary preview display interface, the moon image obtained by the long-focus lens based on the zoom ratio, and display, on the auxiliary preview display interface, the image obtained by the wide-angle lens. This helps the user perform composition on the moon. In the photographing phase, the mobile phone may obtain, based on the photographing operation of the user, the foreground image of a high exposure frame and the moon image of a low exposure frame by using the long-focus lens, and fuse the two images, to obtain an image in which both the foreground and the moon are clear and bright.

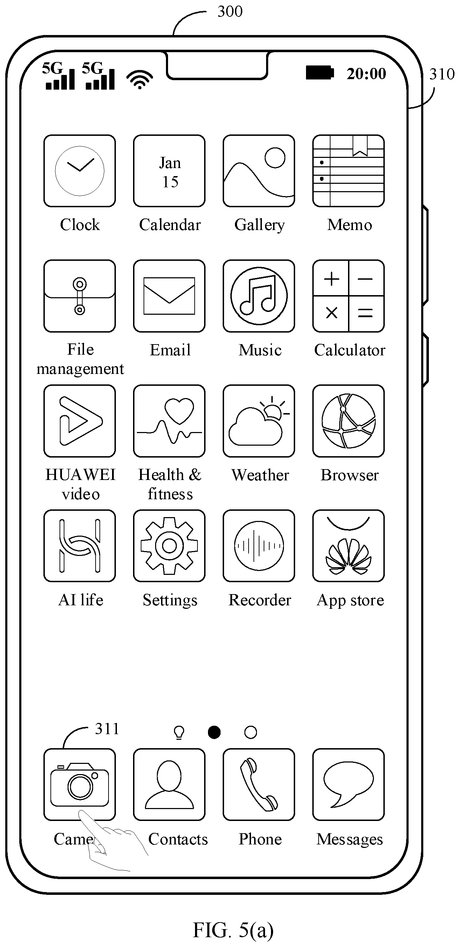

In some cases, the mobile phone may further support additional partial magnification of the moon on the preview interface and in a taken image at a fixed zoom ratio. The following describes the technical solution with reference to FIG. 5(a) to FIG. 12(d).

FIG. 5(a) to FIG. 5(d) are a diagram of another group of GUIs according to an embodiment of this application. Herein, FIG. 5(a) to FIG. 5(d) show a process in which a user uses a mobile phone 300 to photograph the moon.

It should be understood that, for FIG. 5(a), refer to related descriptions of FIG. 3(a). For brevity, details are not described again.

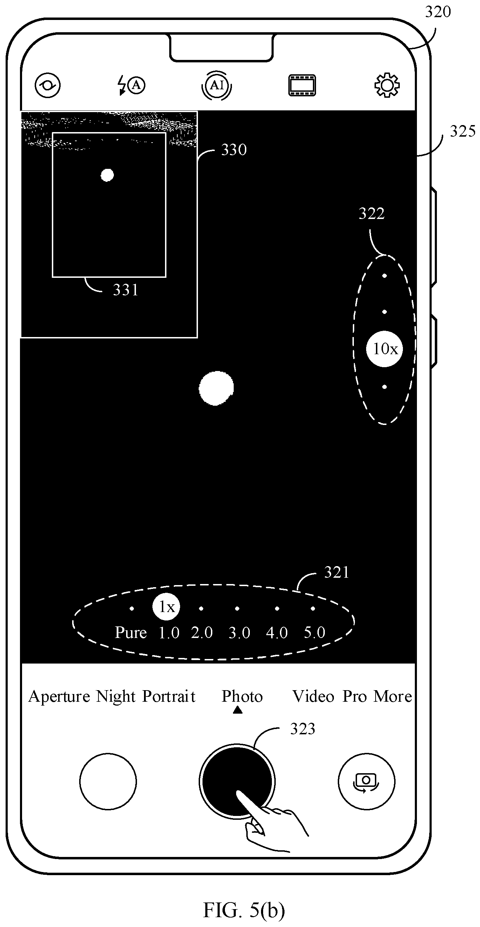

After detecting an operation of tapping a camera icon 311 by the user, the mobile phone 300 may display the GUI shown in FIG. 5(b).

As shown in FIG. 5(b), the GUI is a display interface 320 of the camera that is of the mobile phone 300 and whose optical zoom ratio is 10x and moon magnification ratio is 1x. The display interface 320 may include a primary preview display interface 325, an auxiliary preview display interface 330, a photographing control 323, a function bar, a mode bar, and the like.

A moon image obtained by a long-focus lens may be displayed on the primary preview display interface 325, and the primary preview display interface 325 may further include a zoom ratio control 322 and a moon magnification ratio control 321. The auxiliary preview display interface 330 may be further displayed on an upper left corner of the primary preview display interface 325. The auxiliary preview display interface 330 displays an image obtained by a wide-angle lens.

The user may select a zoom ratio by using the zoom ratio control 322, or may select, by using the moon magnification ratio control 321, a ratio at which the moon is additionally zoomed in the primary preview display interface based on foregoing zoom ratio.

It should be understood that the zoom ratio may include an optical zoom ratio and a digital zoom ratio. The moon magnification ratio may be understood as a ratio at which digital zoom is further performed on the moon based on foregoing zoom ratio.

A preview display interface 331 is a part of the auxiliary preview display interface 330, and indicates a size of an image obtained after the user taps the photographing control. In this case, the user may complete composition of the moon based on an area of the preview display interface 331.

In this way, the user may perform composition on the moon and a foreground based on a preview display interface of the long-focus lens and a preview display interface of the wide-angle lens. This help take a beautiful photo including the moon and the foreground.

It should be understood that, in FIG. 5(b), when the zoom ratio is 10x, the obtained additional moon magnification ratio is 1. In some other embodiments, the user may further adjust, in the moon magnification ratio control 321, an additional magnification ratio for the displayed moon. For example, when the user selects 2x for the moon magnification ratio control 321, the moon displayed on a main interface of the display interface 325 becomes larger.

In some other examples, when the user selects the moon magnification ratio control 321 to be pure, the moon magnification ratio control 321 may be disabled.

In some cases, a position of the moon image displayed on the primary preview display interface and a position of the image displayed on the auxiliary preview display interface may be mutually switched. For example, after detecting an operation of tapping the preview display interface 331 or the auxiliary preview display interface 330 by the user, the mobile phone 300 may display, on the primary preview display interface of the camera, the image obtained by the wide-angle lens, and display, on the auxiliary preview display interface, the moon image obtained by the long-focus lens. This is not limited in embodiments of this application.

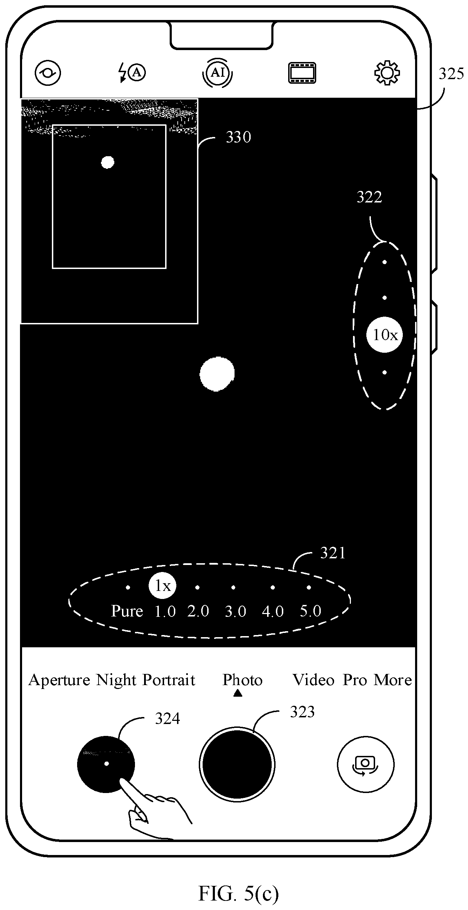

After detecting an operation of tapping the photographing control 323 by the user, the mobile phone 300 may display the GUI shown in FIG. 5(c).

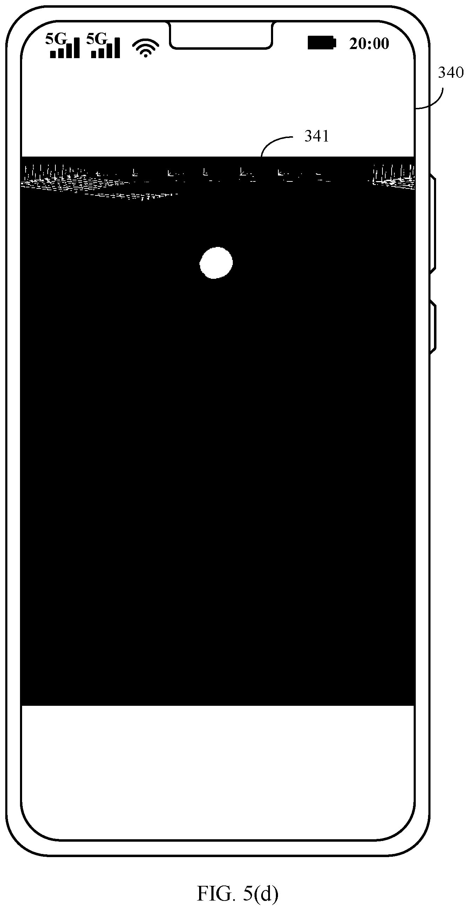

As shown in FIG. 5(c), a display control 324 in the display interface 320 may display a part of an image taken by the mobile phone 300. After detecting an operation of tapping the display control 324 by the user, the mobile phone 300 may display the GUI shown in FIG. 5(d).

In some other examples, the user may further operate the mobile phone to exit the camera and open a gallery, and view a taken image from the gallery.

As shown in FIG. 5(d), the GUI is a display interface 340 of the mobile phone. The display interface 340 may be used to display an image 341 taken by the mobile phone. In the image 341, the moon is clear and bright, and a foreground is also clear and visible. Composition of the moon in the entire image is also harmonious, so that the moon image taken by the mobile phone is more beautiful.

In this embodiment of this application, when the user photographs the moon by using the mobile phone, the moon image taken by the long-focus lens may be displayed on the primary preview display interface of the mobile phone, the image obtained by the wide-angle lens may be displayed on the auxiliary preview display interface, and the image obtained by the wide-angle lens is displayed in a picture-in-picture manner. This helps the user perform composition on the moon and the foreground, and finally take a beautiful image including the moon and the foreground. In addition, the user may further additionally zoom in the moon by using the moon magnification ratio control while keeping a foreground size unchanged, so that flexibility of photographing a moon image by the user can be improved.

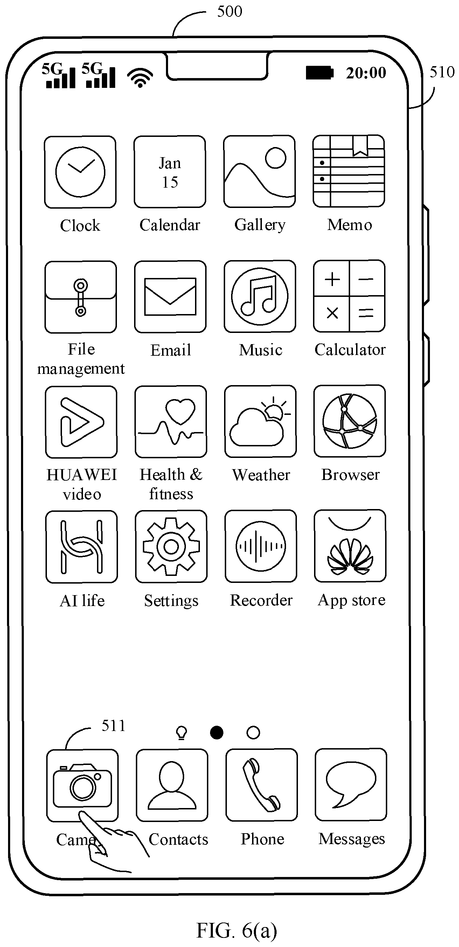

FIG. 6(a) to FIG. 6(d) are a diagram of another group of GUIs according to an embodiment of this application. Herein, FIG. 6(a) to FIG. 6(d) show a process in which a user uses a mobile phone 500 to photograph the moon.

It should be understood that, for FIG. 6(a), refer to related descriptions of FIG. 3(a). For brevity, details are not described again.

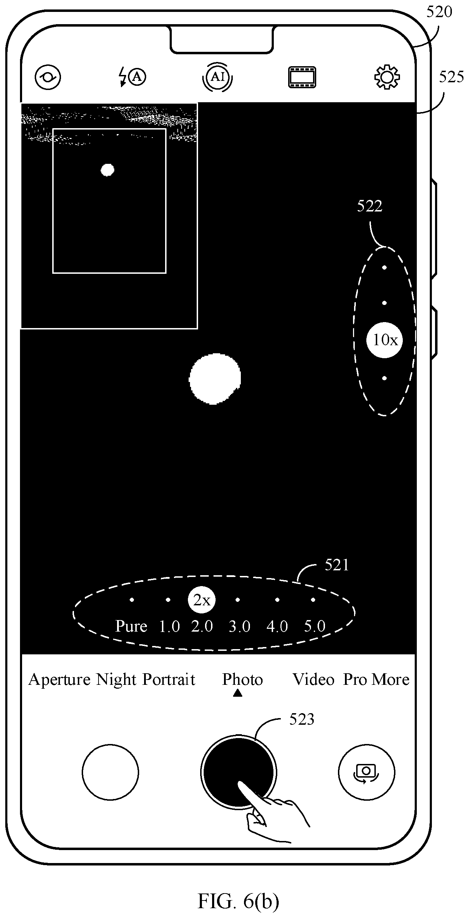

After detecting an operation of tapping a camera icon 511 by the user, the mobile phone 500 may display the GUI shown in FIG. 6(b).

As shown in FIG. 6(b), the GUI is a display interface 520 of the camera that is of the mobile phone 500 and whose zoom ratio is 20x and moon magnification ratio is 2x.

Different from that in the display interface 320, a ratio in a moon magnification ratio control 521 in the display interface 520 is 2x, and the moon in a primary preview display interface 525 in the display interface 520 is larger than the moon in the primary preview display interface 325 in the display interface 320.

When a ratio in a zoom ratio control 522 is 10x, the user selects a moon magnification ratio to be 2x. In this way, the user can further partially zoom in the moon when the ratio in the zoom ratio control 522 is 10x, to improve flexibility of photographing the moon by the user.

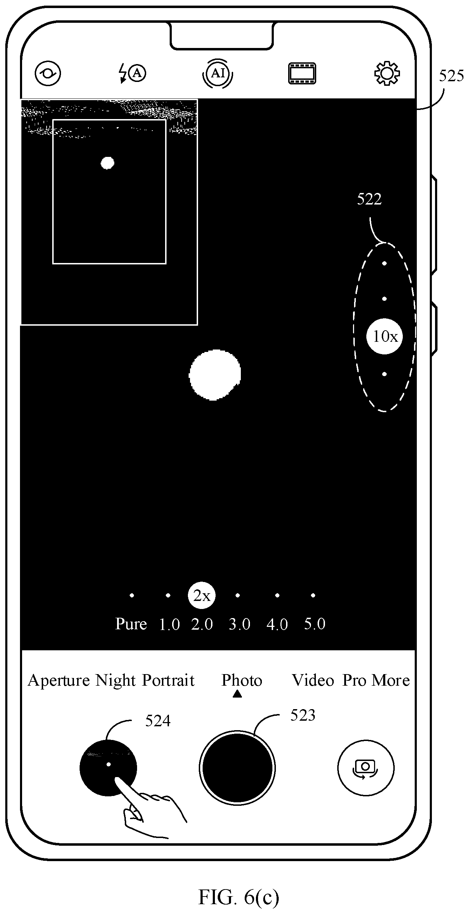

For FIG. 6(c), refer to related descriptions in FIG. 5(c).

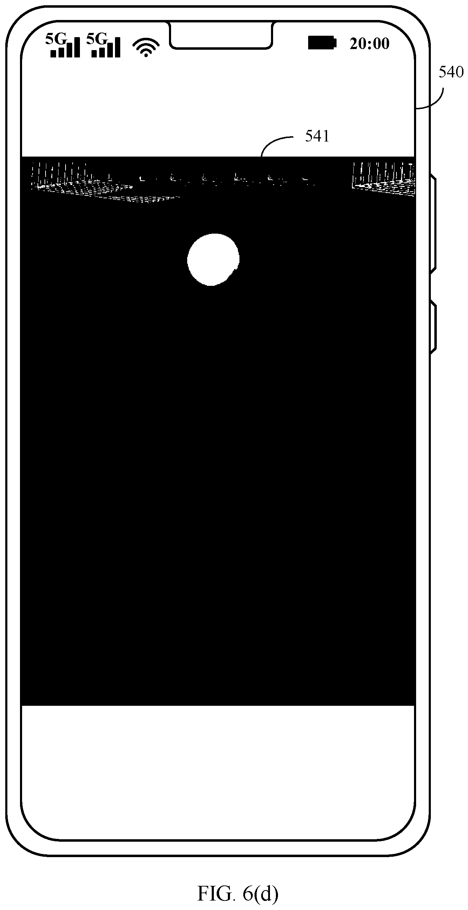

After detecting an operation of tapping a photographing control 524 by the user, the mobile phone may display the GUI shown in FIG. 6(d).

As shown in FIG. 6(d), the GUI is a display interface 540 of the mobile phone 500. The display interface 540 may be used to display an image 541 taken by the mobile phone 500. In the image 541, the moon is big, clear, and bright, and a foreground is clear and visible. Composition of the moon in the entire image is also harmonious, so that the moon image taken by the mobile phone is more beautiful.

In this embodiment of this application, at a fixed zoom ratio, the mobile phone may further additionally zoom in a part of the moon based on an operation of the user, to obtain a larger moon. In addition, the moon is clear and bright, a foreground scenery is also clear, and composition of the moon in the entire image is harmonious, so that the entire moon image is more beautiful.

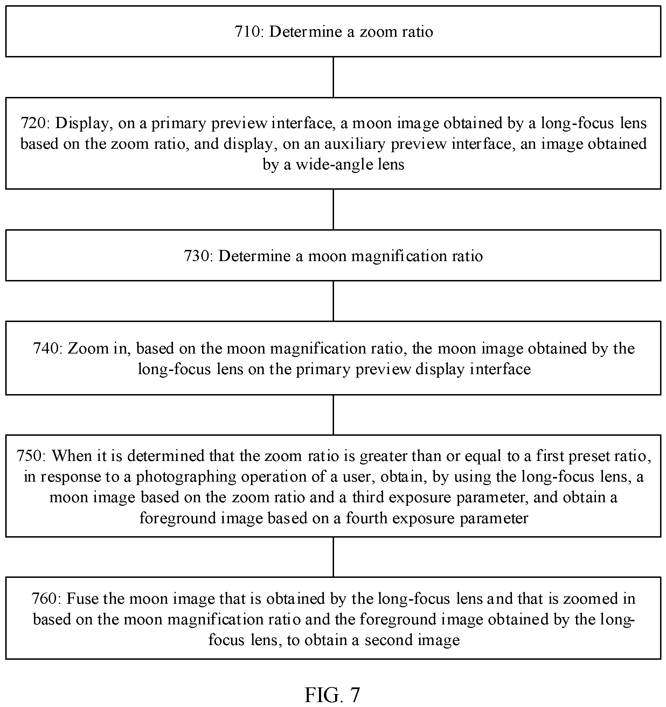

The following describes an implementation process of the moon photographing method in FIG. 4 and FIG. 5(a) to FIG. 5(d) with reference to FIG. 7.

FIG. 7 is a schematic flowchart of a moon photographing method according to an embodiment of this application. As shown in FIG. 7, the method may include step 710 to step 760.

710: Determine a zoom ratio.

720: Display, on a primary preview display interface, a moon image obtained by a long-focus lens based on the zoom ratio, and display, on an auxiliary preview display interface, an image obtained by a wide-angle lens.

It should be understood that, for step 710 and step 720, refer to related descriptions of step 510 and step 520. Details are not described herein again.

730: Determine a moon magnification ratio.

For example, as shown in FIG. 6(b), the moon magnification ratio is controlled by using the moon magnification ratio control 521. For example, the moon magnification ratio is 2x.

740: Zoom in, based on the moon magnification ratio, the moon image obtained by the long-focus lens on the primary preview display interface.

In step 740, on the basis of the moon image obtained by the long-focus lens at a fixed zoom ratio, the mobile phone may additionally zoom in the moon subject based on the moon magnification ratio. In this case, the moon image that is obtained by the long-focus lens and that is displayed on the primary preview display interface of the mobile phone becomes larger.

It should be understood that the moon magnification ratio may be understood as a ratio at which digital zoom is further performed on the moon subject based on the zoom ratio.

In a possible implementation, when zooming in the moon subject based on the moon magnification ratio, the mobile phone may perform interpolation processing on the moon obtained based on the zoom ratio, to obtain the zoomed-in moon subject.

In another possible implementation, when the zoom ratio is 10x, and the moon magnification ratio is 2x, the mobile phone may perform 20x digital zoom on the moon in a scenario in which an optical zoom ratio is 10x, that is, fuse a foreground image whose optical zoom ratio is 10 and a moon image whose digital zoom ratio is 20x to obtain an image.

In another possible implementation, the mobile phone may further include another long-focus lens. When the zoom ratio is 10x and the user selects the moon magnification ratio to be 2x, the long-focus lens may implement a zoom ratio of 20x, so that the moon subject may be zoomed in. It should be understood that when the zoom ratio is 10x, and the moon magnification ratio is 2x, a size of the moon subject displayed on the primary preview display interface of the mobile phone is the same as a size of the moon subject obtained when the zoom ratio is 20x.

In this way, on the primary preview display interface of the mobile phone, the user may flexibly adjust the size of the moon subject by using the moon magnification ratio control.

750: When it is determined that the zoom ratio is greater than or equal to a first preset ratio, in response to a photographing operation of the user, obtain, by using the long-focus lens, a moon image based on the zoom ratio and a third exposure parameter, and obtain a foreground image based on a fourth exposure parameter.

It should be understood that, for step 750, refer to the related description of step 530. For brevity, details are not described again.

760: Fuse the moon image that is obtained by the long-focus lens and that is zoomed in based on the moon magnification ratio and the foreground image obtained by the long-focus lens, to obtain a second image.

It should be understood that, the moon image is obtained by the long-focus lens based on the zoom ratio and is zoomed in based on the moon magnification ratio, and the foreground image is obtained by the long-focus lens based on the zoom ratio.

The following describes a technical solution of fusion with reference to specific embodiments. Details are not described herein.

In this embodiment of this application, when photographing the moon, the mobile phone may display, on the primary preview display interface, the moon image obtained by the long-focus lens based on the zoom ratio, zoom in the moon subject based on the moon magnification ratio, and display, on the auxiliary preview interface, the image obtained by the wide-angle lens. This helps the user perform composition on the moon. In the photographing phase, the mobile phone may obtain, based on the photographing operation of the user, the moon image of a low exposure frame and the foreground image of a high exposure frame that are obtained by the long-focus lens and that are zoomed in based on the moon magnification ratio, and fuse the two images, to obtain an image in which both the foreground and the moon are clear and bright.

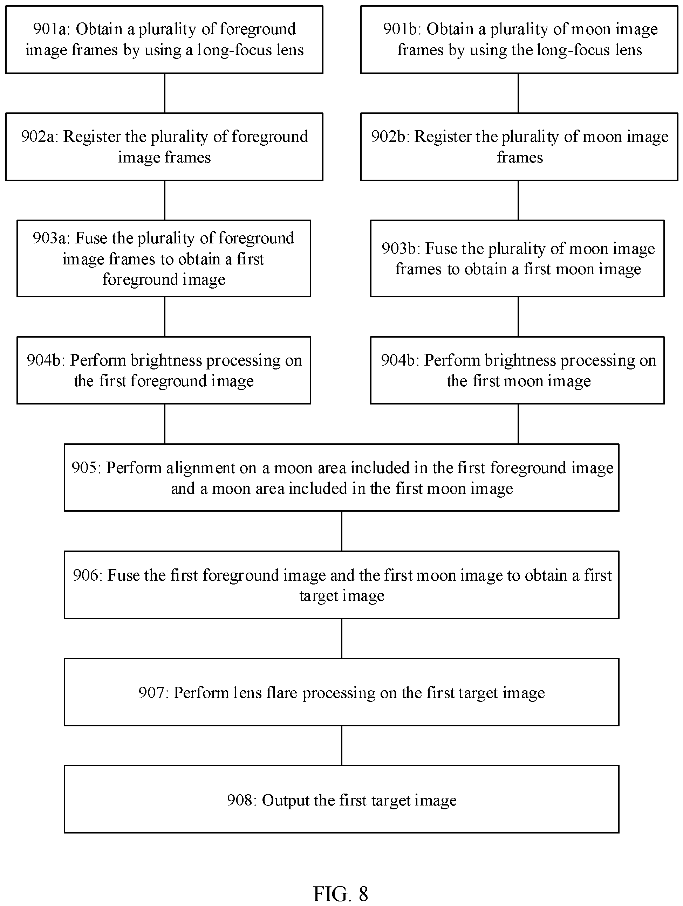

FIG. 8 is an example flowchart of a photographing phase according to an embodiment of this application. As shown in FIG. 8, the photographing phase may include step 901 to step 908.

Step 901 includes steps 901a and 901b, step 902 includes steps 902a and 902b, step 903 includes steps 903a and 903b, and step 904 includes steps 904a and 904b.

901a: Obtain a plurality of foreground image frames by using a long-focus lens.

For example, when detecting an operation of tapping a photographing control by a user, an electronic device may start to collect a plurality of foreground image frames. For example, the plurality of foreground image frames may be collected based on different exposure parameters.

A specific quantity of foreground image frames is not limited in embodiments of this application. For example, the quantity of foreground image frames may be 3, 5, or the like. It should be understood that in some examples, the electronic device may further obtain one foreground image frame by using the long-focus lens. This is not limited in embodiments of this application.

It should be understood that, in this embodiment of this application, the electronic device may determine, based on a zoom ratio, to select the long-focus lens to collect the plurality of foreground image frames.

In an example, when the electronic device determines that the zoom ratio is greater than or equal to a first preset ratio, the foreground image frame is obtained by the electronic device by using the long-focus lens. For example, the first preset ratio may be 10x. As shown in FIG. 5(a) to FIG. 5(d), the zoom ratio is 10x. The primary preview display interface 325 of the camera includes the moon image obtained by the long-focus lens, and the auxiliary preview display interface 330 includes the image obtained by the wide-angle lens. After the user taps the photographing control 323, the mobile phone may obtain a plurality of foreground image frames by using the long-focus lens.

In step 901a, the electronic device may obtain the plurality of foreground image frames by using the long-focus lens based on a high exposure parameter, so that the foreground image is clearer.

901b: Obtain a plurality of moon image frames by using the long-focus lens.

For example, when detecting an operation of tapping the photographing control by the user, the electronic device may start to collect a plurality of moon image frames. For example, the plurality of moon image frames may be collected based on different exposure parameters.

A specific quantity of moon image frames is not limited in embodiments of this application. For example, the quantity of moon image frames may be 3, 5, or the like. In some other examples, the electronic device may further obtain one moon image frame by using the long-focus lens. This is not limited in embodiments of this application.

It should be understood that the moon image frame may be obtained by the electronic device by using the long-focus lens. For example, as shown in FIG. 5(a) to FIG. 5(d), after detecting an operation of tapping the photographing control by the user, the mobile phone may obtain a plurality of moon image frames by using the long-focus lens.

In step 901b, the electronic device may obtain the plurality of moon image frames by using the long-focus lens based on a low exposure parameter, so that the moon image is clearer. For example, the moon image frame is obtained based on long exposure time.

902a: Register the plurality of foreground image frames.

It should be understood that, when the user photographs the moon, there may be slight jitter. Therefore, there may be a slight difference between the plurality of foreground image frames collected by the electronic device. Therefore, in step 902a, the plurality of collected foreground image frames are registered, to facilitate subsequent fusion of the plurality of foreground image frames.

Because an exposure difference between the foreground image frames is small, registration may be performed based on image information of the foreground image frame.

902b: Register the plurality of moon image frames.

Similarly, it is considered that there may be a slight difference between the plurality of moon image frames. Therefore, in step 902b, the plurality of moon image frames are registered, to facilitate subsequent fusion of the plurality of moon image frames.

For example, in this embodiment of this application, contours of moon areas in the plurality of moon image frames may be drawn, and a moon center alignment manner is selected for registration.

903a: Fuse the plurality of foreground image frames to obtain a first foreground image.

It should be understood that, in step 903a, one first foreground image is obtained by fusing the plurality of foreground image frames, so that the first foreground image is clearer and can include more details.

In some other examples, a plurality of foreground image frames with a same exposure parameter may be further fused into one clear foreground image.

903b: Fuse the plurality of moon image frames to obtain a first moon image.

It should be understood that, in step 903b, one first moon image is obtained by fusing the plurality of moon image frames, so that the moon in the first moon image is clearer and can include more details.

In some other examples, a plurality of moon image frames with a same exposure parameter may be further fused into one clear moon image.

904a: Perform brightness processing on the first foreground image.

For example, brightness adaptive processing may be performed on the first foreground image obtained in step 903a. For example, brightness adaptive processing may be performed by using a tone mapping (tone mapping) technology.

The tone mapping technology is to first calculate average brightness of a scene based on the current scene, then select a proper brightness domain based on the average brightness, and then map the entire scene to the brightness domain to obtain a correct result.

It should be understood that step 904a is an optional step. In some embodiments, step 904a may not be performed.

904b: Perform brightness processing on the first moon image.

For example, brightness adaptive processing may be performed on the first moon image obtained in step 903b. For example, brightness adaptive processing may be performed by using a tone mapping (tone mapping) technology.

It should be understood that step 904b is an optional step. In some embodiments, step 904b may not be performed.

905: Perform alignment on a moon area included in the first foreground image and a moon area included in the first moon image.

When the user photographs the moon, there may be slight jitter. Therefore, there may be a slight difference between moon positions in the obtained first foreground image and first moon image. In step 905, alignment may be performed on the moon areas included in the first foreground image and the first moon image.

In a possible implementation, the moon area in the first foreground image and the moon area in the first moon image may be drawn, and center points of the moon areas are selected to for moon alignment, to ensure that the moon is in a same position when the two images are fused.

In some other examples, in step 905, correction may be further performed on moon sizes of the first foreground image and the first moon image.

906: Fuse the first foreground image and the first moon image to obtain a first target image.

In step 906, the first foreground image and the first moon image that are obtained after moon alignment may be fused, to obtain a target image with a clear foreground and moon.

For example, as shown in FIG. 3(a) to FIG. 3(d), when the zoom ratio of the mobile phone is 10x, it may be understood that the mobile phone is in a state of a high zoom ratio. When the mobile phone detects an operation of tapping the photographing control by the user, the mobile phone may obtain the moon image by using the long-focus lens based on a low exposure parameter, obtain the foreground image by using the long-focus lens based on a high exposure parameter, and fuse the foreground image and the moon image to obtain a target image.

For example, as shown in FIG. 6(a) to FIG. 6(d), when there are a zoom ratio control and a moon magnification ratio control in the display interface of the camera, the first moon image is a moon image that is obtained by the long-focus lens and that is zoomed in based on a moon magnification ratio. When the mobile phone detects an operation of tapping the photographing control by the user, the mobile phone may obtain the moon image by using the long-focus lens based on a low exposure parameter, zoom in the moon subject based on the moon magnification ratio, to obtain the first moon image, obtain the first foreground image by using the long-focus lens based on a high exposure parameter, and fuse the first foreground image and the first moon image to obtain a target image.

When the first foreground image and the first moon image are fused, an overexposed size of the moon subject in the foreground image frame is generally slightly greater than a size of the moon subject in the moon image frame. Therefore, when the two images are fused, some holes may exist on the edge of the moon. In this embodiment of this application, the hole on the edge of the moon may be processed in the following several manners.

Manner 1: Perform multi-frame continuous exposure.

For example, multi-frame continuous exposure is performed between the first moon image frame and the first foreground image frame, so that a difference between images of two adjacent frames is small, and a transition from the first moon image frame to the first foreground image frame is natural. Then, images of a plurality of frames are fused, so that a hole on the edge of the moon can be avoided, and a size of a moon subject in a finally obtained image is the same as a size of a moon subject in the first moon image frame.

Manner 2: Zoom in the moon in the first moon image.

For example, the moon in the first moon image may be zoomed in by 1.1 times, 1.2 times, or the like, so that the zoomed-in moon is the same as the moon in the first foreground image.

Manner 3: Fill the hole on the edge of the moon with the sky around the moon.

For example, Manner 3 may be implemented by using an algorithm. For example, a smooth transition from the sky around the moon to the moon is implemented by using an algorithm, so that the generated sky can fill the hole on the edge of the moon.

907: Perform lens flare processing on the first target image

There is a strong lens flare around the moon subject. In this embodiment of this application, the lens flare may be suppressed in a manner like filtering or an AI algorithm, so that the lens flare of the moon is natural.

It should be understood that step 907 is an optional step. In some examples, step 907 may not be performed.

908: Output the first target image.

After a processing process of the foregoing steps, a beautiful and clear first target image may be obtained, and the mobile phone may save the first target image for the user to view.

In this embodiment of this application, when photographing the moon, the electronic device is at a high zoom ratio, and may obtain the foreground image by using the long-focus lens, obtain the moon image by using the long-focus lens, and fuse the foreground image and the moon image to obtain the target image. In the target image, the moon is clear and bright, a lens flare is natural, and a foreground is clear and visible. Composition of the entire image is beautiful.

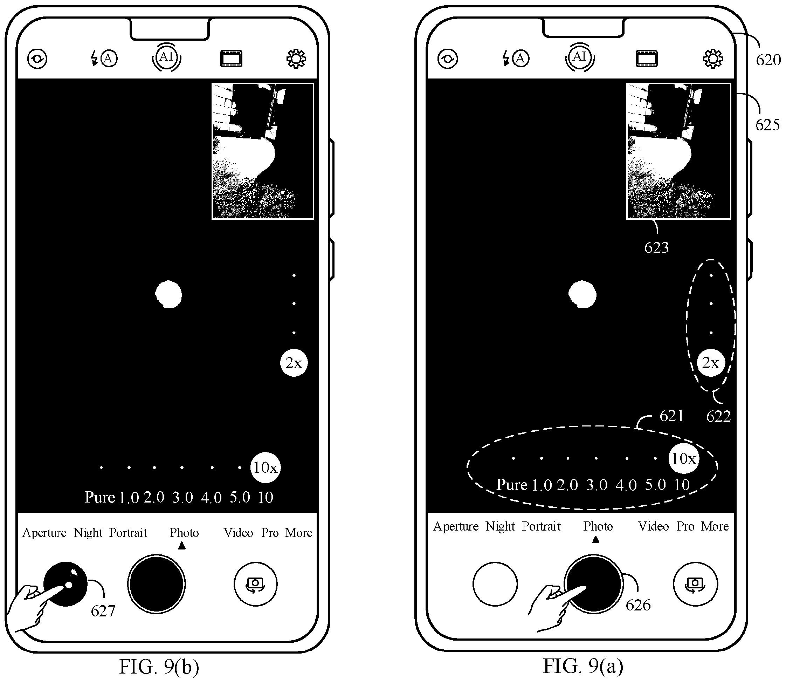

In some cases, in a scene in which the user photographs the moon, because a foreground scenery is beautiful, the user may expect to place a foreground in an image as much as possible. In other words, in a finally taken image, a zoom ratio of a foreground is low, and the foreground occupies a larger proportion in the image. For example, the zoom ratio of the foreground is less than 5x, for example, 1x or 2x. The following describes the technical solution with reference to FIG. 9(a) to FIG. 9(c).

FIG. 9(a) to FIG. 9(c) are a diagram of another group of GUIs according to an embodiment of this application. Herein, FIG. 9(a) to FIG. 9(c) show a process in which the user uses a mobile phone 600 to photograph the moon.

As shown in FIG. 9(a), the GUI is a display interface 620 of a camera of the mobile phone 600. The display interface 620 may include a primary preview display interface 625, an auxiliary preview display interface 623, a photographing control 626, a function bar, a mode bar, and the like.

The moon photographed by a long-focus lens may be displayed on the primary preview display interface 625, and the primary preview display interface 625 may further include a zoom ratio control 622 and a moon magnification ratio control 621.

For example, a ratio in the optical zoom ratio control 622 is 2x, and a ratio in the moon magnification ratio control 621 is 10x.

In the auxiliary preview display interface 623, because of a preview display picture of a wide-angle lens, buildings and trees in the picture are clearly visible, but the moon is in an overexposed state, and details of the moon are invisible. However, when a ratio of the moon image obtained by the long-focus lens is 2x, the moon image is further zoomed in by 10x based on the moon magnification ratio. Therefore, details of the moon on the primary preview display interface 625 are clear and the moon is beautiful.

In some examples, the display interface 620 is a display interface of the mobile phone in a moon mode.

After detecting an operation of tapping the photographing control 626 by the user, the mobile phone may display the GUI shown in FIG. 9(b).

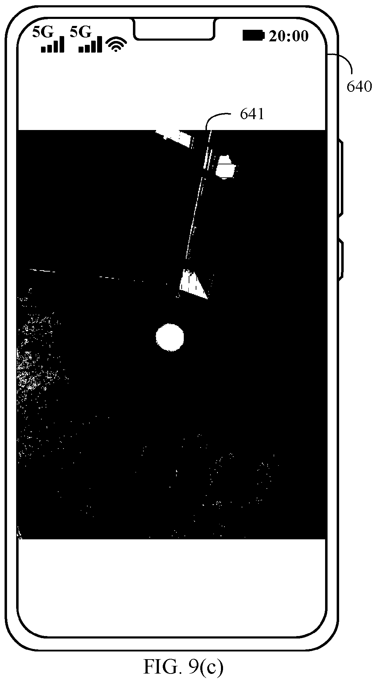

As shown in FIG. 9(b), a display control 627 in the display interface 620 may display a part of an image taken by the mobile phone 600. After detecting an operation of tapping the display control 627 by the user, the mobile phone 600 may display the GUI shown in FIG. 9(c).

In some other examples, the user may further operate the mobile phone to exit the camera and open a gallery, and view a taken image from the gallery.

As shown in FIG. 9(c), the GUI is a display interface 640 of the mobile phone. The display interface 640 may be used to display an image 641 taken by the mobile phone 600. In the image 641, the moon photographed by the long-focus lens is clear and bright, and a foreground photographed by the wide-angle lens is also clear and visible, so that the moon image taken by the mobile phone is more beautiful.

In this embodiment of this application, for example, when detecting an operation of tapping the photographing control by the user, the mobile phone may fuse the moon image taken by the long-focus lens and the wide-angle image taken by the wide-angle lens to obtain a final image. Therefore, the final image includes both a clear foreground photographed by the wide-angle lens and a clear moon photographed by the long-focus lens, so that the foreground occupies a larger proportion in the image, and the moon is also very clear.

It should be understood that the technical solutions in FIG. 3(a) to FIG. 9(c) may be used in combination. This is not limited in embodiments of this application.

In an example, in FIG. 5(b), when the mobile phone detects that the user slides the ratio in the moon magnification ratio control 321 to 2x, the mobile phone may display the GUI shown in FIG. 6(b).

In another example, in (a) in FIG. 8, when the mobile phone detects that the user slides the ratio in the zoom ratio control 622 to 10x and slides the ratio in the moon magnification ratio control 621 to 1x, the mobile phone may display the GUI shown in FIG. 5(b).

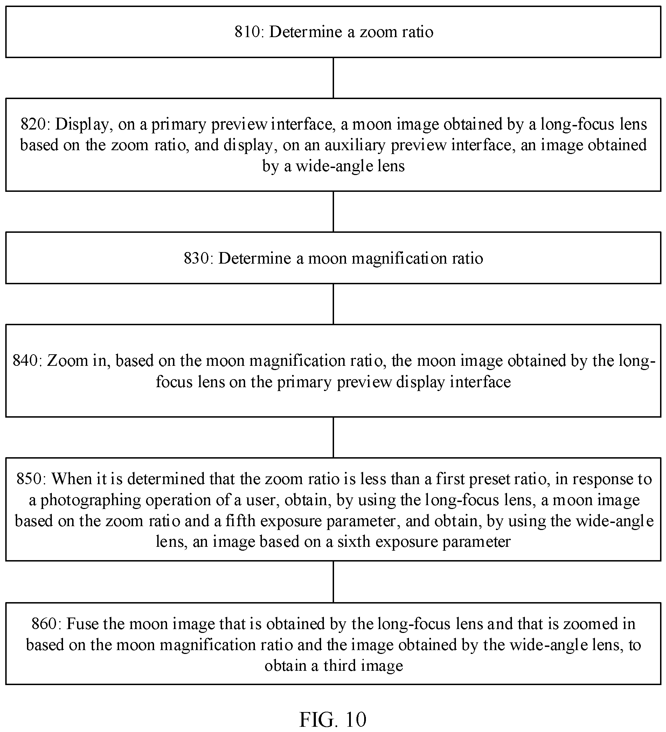

The following describes an implementation process of the moon photographing method in FIG. 9(a) to FIG. 9(c) with reference to FIG. 10.

FIG. 10 is a schematic flowchart of a moon photographing method according to an embodiment of this application. As shown in FIG. 10, the method may include step 810 to step 860.

810: Determine a zoom ratio.

It should be understood that, for step 810, refer to related descriptions in step 510.

820: Display, on a primary preview display interface, a moon image obtained by a long-focus lens based on the zoom ratio, and display, on an auxiliary preview display interface, an image obtained by a wide-angle lens.

In some other examples, when the zoom ratio is small, for example, the zoom ratio is 2x, the moon on the primary preview display interface is small, and therefore, there is no other picture on the primary preview display interface except the small moon. In this case, the user may display, on the auxiliary display interface by tapping the auxiliary preview display interface or a switch button, the moon image obtained by the long-focus lens, and display, on the primary preview display interface, the image obtained by the wide-angle lens.

830: Determine a moon magnification ratio.

840: Zoom in, based on the moon magnification ratio, the moon image obtained by the long-focus lens on the primary preview display interface.

It should be understood that, for steps 830 and 840, refer to related descriptions in steps 730 and 740. For brevity, details are not described herein again.

It should be further understood that a specific execution sequence of step 810 to step 840 is not limited in embodiments of this application. For example, step 810 and step 830 may be performed in one step or simultaneously, or step 830 is performed before or after step 810.

850: When it is determined that the zoom ratio is less than a first preset ratio, in response to a photographing operation of a user, obtain, by using the long-focus lens, a moon image based on the zoom ratio and a fifth exposure parameter, and obtain, by using the wide-angle lens, an image based on a sixth exposure parameter.

In step 850, when it is determined that the zoom ratio is less than the first preset ratio, for example, the zoom ratio is 2x, it may be determined that the long-focus lens is at a low ratio. When the user taps a photographing button, the mobile phone may obtain a moon image of a high exposure frame based on the zoom ratio by using the long-focus lens, and normally obtain an image by using the wide-angle lens, to obtain a richer foreground scenery.

For the fifth exposure parameter and the sixth exposure parameter, refer to the foregoing descriptions.

860: Fuse the moon image that is obtained by the long-focus lens and that is zoomed in based on the moon magnification ratio and the image obtained by the wide-angle lens, to obtain a third image. It should be understood that, in an image fusion phase, the mobile phone may further zoom in, based on the moon magnification ratio, the moon subject in the moon image obtained by the long-focus lens, and fuse the zoomed-in image and the image obtained by the wide-angle lens, to obtain the final third image.

In this embodiment of this application, in a moon photographing scenario, when a zoom ratio of the long-focus lens of the mobile phone is at a low ratio, in response to a photographing operation of the user, the mobile phone may zoom in, based on the moon magnification ratio, the moon image obtained by the long-focus lens, and fuse the zoomed-in moon image and the image obtained by the wide-angle lens, to obtain the final image. In this way, the finally obtained image includes rich foreground content and a bright and clear moon.

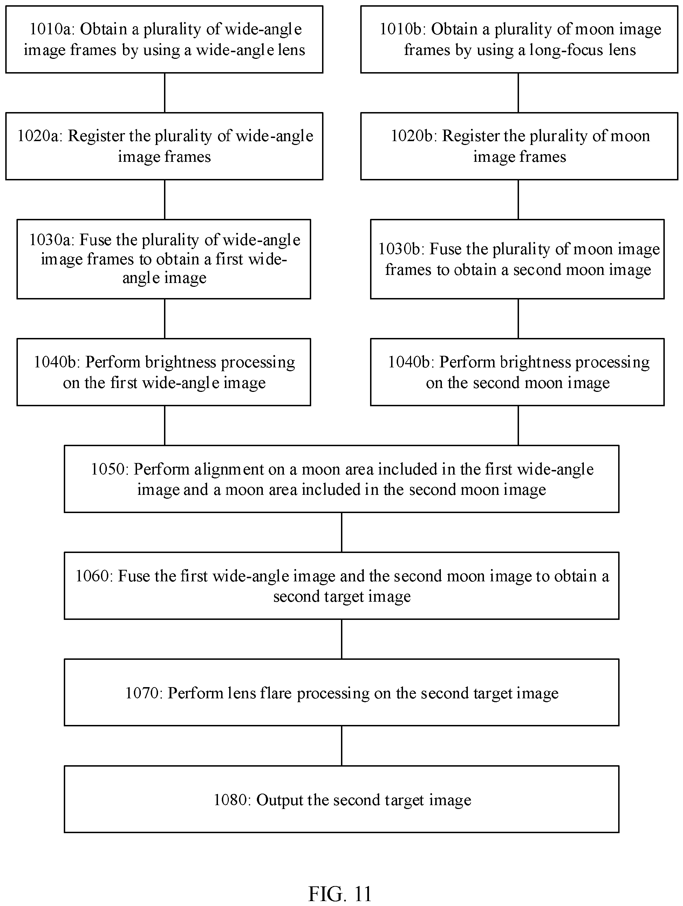

FIG. 11 is an example flowchart of the photographing phase in FIG. 9(a) to FIG. 9(c). As shown in FIG. 11, the photographing phase may include step 1010 to step 1080.

Step 1010 includes steps 1010a and 1010b, step 1020 includes steps 1020a and 1020b, step 1030 includes steps 1030a and 1030b, and step 1040 includes steps 1040a and 1040b.

1010a: Obtain a plurality of wide-angle image frames by using a wide-angle lens.

For example, when detecting an operation of tapping the photographing control by the user, the electronic device may collect the plurality of wide-angle image frames by using the wide-angle lens. For example, the plurality of wide-angle image frames may be collected based on different exposure parameters or a same exposure parameter.

A specific quantity of the wide-angle image frames is not limited in embodiments of this application. For example, a quantity of wide-angle image frames may be 3, 5, 1, or the like.

In an example, when determining that the zoom ratio is less than the first preset ratio, the electronic device may obtain the wide-angle image frame by using the wide-angle lens. For example, the first preset ratio may be 10x. As shown in FIG. 8, when the zoom ratio is 2x, the primary preview display interface 625 of the camera includes the moon image obtained by the long-focus lens, and the auxiliary preview display interface 623 includes the wide-angle image obtained by the wide-angle lens. After the user taps the photographing control 626, the mobile phone may obtain a plurality of wide-angle image frames by using the wide-angle lens.

1010b: Obtain a plurality of moon image frames by using the long-focus lens.

For example, when detecting an operation of tapping the photographing control by the user, the electronic device may collect the plurality of moon image frames by using the long-focus lens. For example, the plurality of moon image frames may be collected based on different exposure parameters or a same exposure parameter.

A specific quantity of moon image frames is not limited in embodiments of this application. For example, a quantity of the moon image frames may be 3, 5, 1, or the like.

It should be understood that when the user taps the photographing control, the electronic device may synchronously perform steps 1010a and 1010b.

1020a: Register the plurality of wide-angle image frames.

1020b: Register the plurality of moon image frames.

It should be understood that, for a manner of image registration, refer to related descriptions of steps 902a and 902b. For brevity, details are not described again.

1030a: Fuse the plurality of wide-angle image frames to obtain a first wide-angle image.

1030b: Fuse the plurality of moon image frames to obtain a second moon image.

It should be understood that, for a fusion manner, refer to related descriptions of steps 903a and 903b. For brevity, details are not described again.

1040a: Perform brightness processing on the first wide-angle image.

1040b: Perform brightness processing on the second moon image.

It should be understood that, for a brightness processing manner, refer to related descriptions of steps 1040a and 1040b. For brevity, details are not described again.

1050: Perform alignment on a moon area included in the first wide-angle image and a moon area included in the second moon image.

It should be understood that, for a manner of the moon alignment, refer to related descriptions of step 905.

1060: Fuse the first wide-angle image and the second moon image to obtain a second target image.

For example, as shown in FIG. 9(a) to FIG. 9(c), when there are a zoom ratio control and a moon magnification ratio control in the display interface of the camera, the second moon image is a moon image that is obtained by the long-focus lens and that is zoomed in based on a moon magnification ratio. When the zoom ratio of the mobile phone is 2x, it may be understood that the mobile phone is in a state of a low zoom ratio. When the mobile phone detects an operation of tapping the photographing control by the user, the mobile phone may obtain the moon image by using the long-focus lens, zoom in the moon subject based on the moon magnification ratio to obtain the second moon image, obtain the wide-angle image by using the wide-angle lens, and fuse the wide-angle image and the moon image, to obtain a second target image.

1070: Perform lens flare processing on the second target image.

1080: Output the second target image.

It should be understood that, for steps 1070 and 1080, refer to related descriptions of steps 907 and 908.

In this embodiment of this application, when photographing the moon, the electronic device is at a low zoom ratio, and may obtain the wide-angle image by using the wide-angle lens, obtain the moon image by using the long-focus lens, and fuse the wide-angle image and the moon image to obtain the second target image. In the second target image, the moon is clear and bright, a lens flare is natural, and a foreground is clear and visible. Composition of the entire image is beautiful.

In this embodiment of this application, at a high zoom ratio, because definition of the wide-angle lens is poor, an obtained foreground image may be blurry, and is lower than definition of the foreground image obtained by the long-focus lens. Therefore, the foreground image obtained by using the long-focus lens and the moon image obtained by the long-focus lens are fused to obtain a target image in which both the moon subject and the foreground are clear and visible. When the electronic device switches the zoom ratio to a lower ratio, and selects a high moon magnification ratio, the foreground image obtained by the wide-angle lens has a larger size and high definition. The moon image obtained by the long-focus lens and the foreground image obtained by the wide-angle lens are fused, so that the foreground is beautiful and the moon is clear. In this way, a fusion solution in an all-focus segment can be implemented.

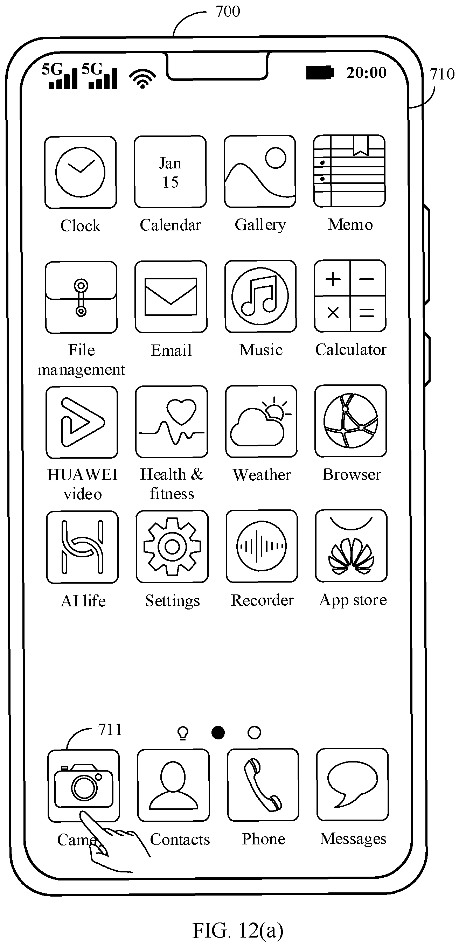

FIG. 12(a) to FIG. 12(d) are a diagram of another group of GUIs according to an embodiment of this application. Herein, FIG. 12(a) to FIG. 12(d) show a process in which a user photographs a moon by using a mobile phone 700, and obtains a silhouette image including a clear moon and foreground.

It should be understood that, for FIG. 12(a), refer to related descriptions of FIG. 3(a). For brevity, details are not described again.

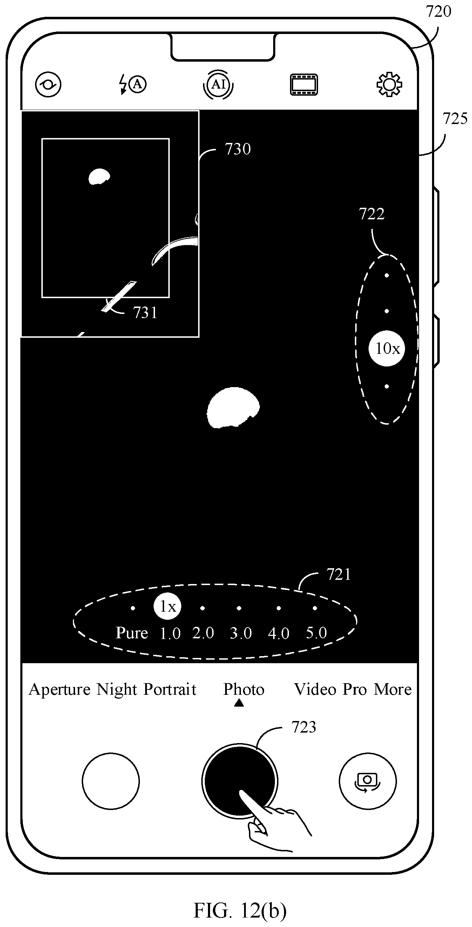

After detecting an operation of tapping a camera icon 711 by a user, the mobile phone 700 may display the GUI shown in FIG. 12(b).

As shown in FIG. 12(b), the GUI is a display interface 720 of the camera whose zoom ratio is 10x and moon magnification ratio is 1x on the mobile phone 700.

In the display interface 720, a moon image obtained by a long-focus lens is displayed on a primary preview display interface 725, and a foreground image obtained by a wide-angle lens is displayed on an auxiliary preview display interface 730 in a picture-in-picture manner.

As shown in FIG. 12(b), a difference from FIG. 5(b) is that a foreground on the preview interface is black, and only a few objects exist. In this case, this application does not blindly aim to improve foreground brightness, but displays silhouette effect in the preview interface. As shown in FIG. 12(b), there are only a small quantity of lights in the foreground on the auxiliary preview display interface 730, and the foreground included in the primary preview display interface 731 also has silhouette effect.

In this way, when the foreground includes a small quantity of objects, for example, the foreground includes only a small quantity of trees, utility poles, and building lights, silhouette effect may be displayed in the foreground on the preview interface of the camera, to improve an artistic aesthetic sense of the obtained image.

In another possible implementation, the mobile phone may perform distribution statistics collection on brightness values of the foreground. When it is determined, based on a statistical result, that the foreground is dark and a signal-to-noise ratio is less than a preset value, the mobile phone may display silhouette effect instead of blindly increasing the brightness.

For example, when displaying the preview display interface, the mobile phone may perform summation on brightness values of the foreground, and when a summation result is less than a preset brightness value A, the mobile phone may display silhouette effect instead of blindly increasing brightness.

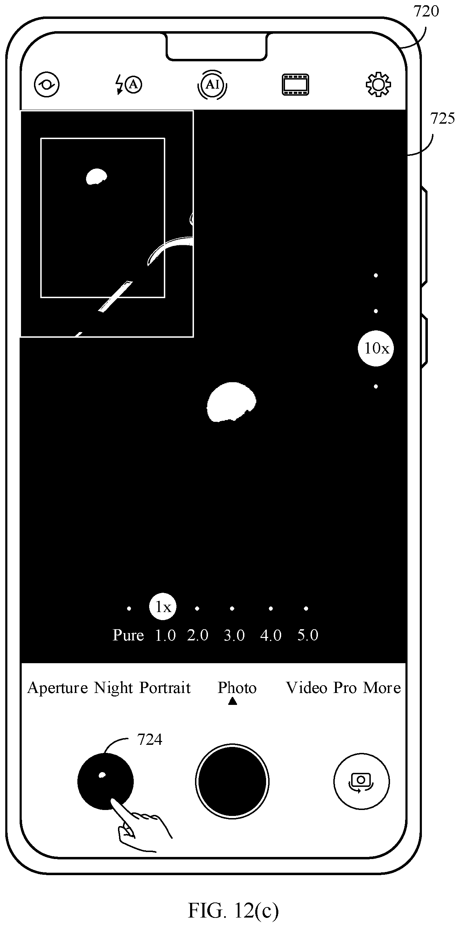

After detecting an operation of tapping the photographing control 723 by the user, the mobile phone 700 may display the GUI shown in FIG. 12(c).

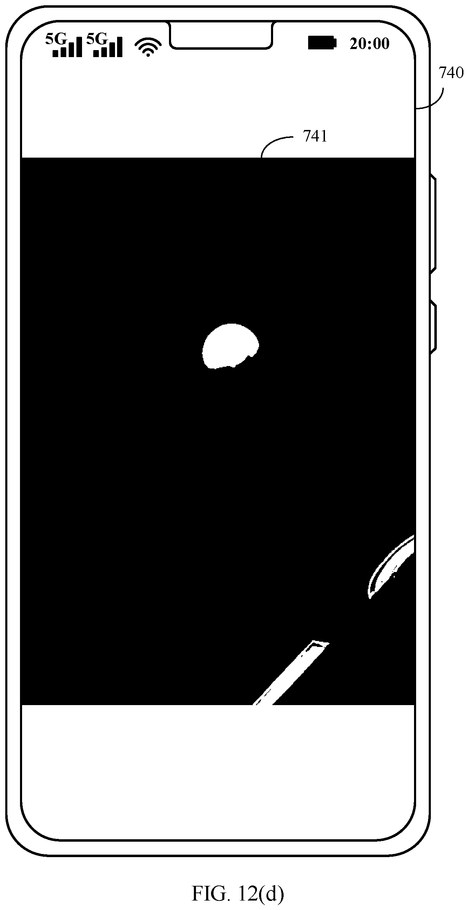

As shown in FIG. 12(c), a display control 724 in the display interface 725 may display a part of an image taken by the mobile phone 700. After detecting an operation of tapping the display control 724 by the user, the mobile phone 700 may display the GUI shown in FIG. 12(d).

As shown in FIG. 12(d), the GUI is a display interface 740 of the mobile phone. The display interface 740 may be used to display an image 741 taken by the mobile phone 700. In the image 741, the moon photographed by the long-focus lens is clear and bright, and a light of the foreground is displayed as silhouette effect.

In this embodiment of this application, when the foreground includes a small quantity of objects, if foreground brightness is forcibly increased, display effect is poor. In this embodiment of this application, the foreground brightness is not improved, but the objects in the foreground are displayed as silhouette effect, so that a finally obtained image has an artistic aesthetic sense.

In some other embodiments, after entering the preview interface of the camera, the mobile phone may perform brightness summation on the foreground. When determining that the summation result is less than the preset brightness value A, the mobile phone may display silhouette effect of the foreground. When determining that the summation result is greater than or equal to the preset brightness value A, the mobile phone may normally display the foreground, and does not display the silhouette effect.

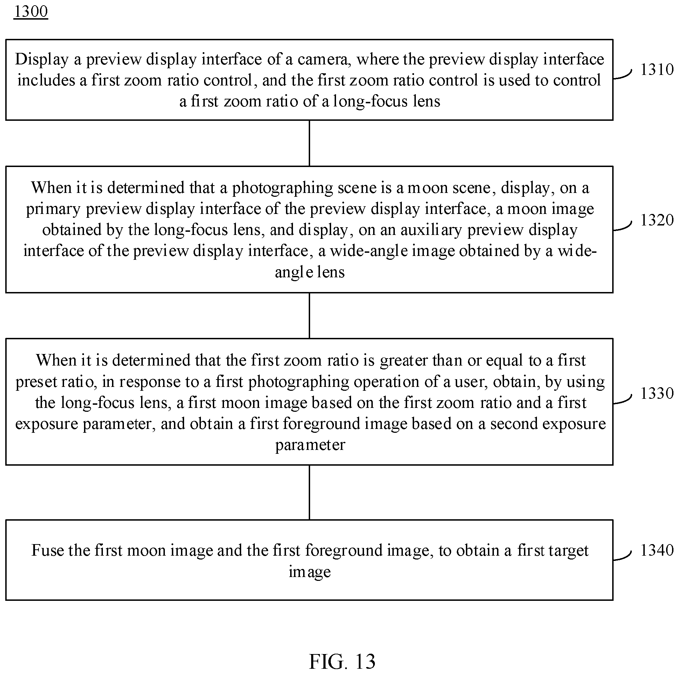

FIG. 13 is a schematic flowchart of a moon photographing method according to an embodiment of this application. As shown in FIG. 13, a method 1300 may be applied to an electronic device. The electronic device may include a long-focus lens and a wide-angle lens. The method 1300 may include step 1310 to step 1340.

1310: The electronic device displays a preview display interface of a camera, where the preview display interface includes a first zoom ratio control, and the first zoom ratio control is used to control a first zoom ratio of the long-focus lens.

For example, the electronic device may display the preview display interface of the camera based on an operation of opening the camera by the user. The preview display interface may be referred to as a framing interface, a preview interface, a camera display interface, or the like.

It should be understood that the operation of opening the camera by the user may be that the user taps a camera application on a home screen, or may be an operation of invoking the camera by the user in another application. This is not limited in embodiments of this application.

The preview display interface may include a first zoom ratio control. For example, as shown in FIG. 3(b), the first zoom ratio control may be the zoom ratio control 222. It should be understood that the zoom ratio control is used to control a first zoom ratio of the long-focus lens of the electronic device, and the first zoom ratio may include an optical zoom ratio and/or a digital zoom ratio.

In some other examples, the electronic device may further automatically enter a moon mode after identifying the moon, and perform the following steps in the moon mode.

1320: When the electronic device determines that a photographing scene is a moon scene, display, on a primary preview display interface of the preview display interface, a moon image obtained by the long-focus lens, and display, on an auxiliary preview display interface of the preview display interface, a wide-angle image obtained by the wide-angle lens.

For example, as shown in FIG. 3(b) and FIG. 5(b), the moon image may be displayed on the primary preview display interface of the camera, and the foreground image may be displayed on the auxiliary preview display interface.

In this way, the image obtained by the wide-angle lens is displayed on the auxiliary preview display interface of the camera in a picture-in-picture manner. This can assist the user in performing composition on the moon when photographing the moon.

It should be understood that a manner of determining, by the electronic device, that a photographing scene is a moon scene may be automatically determined based on the photographing scene of the user, or may be determined by the user by selecting a moon mode. A specific manner of determining the moon scene is not limited in embodiments of this application.

1330: When the electronic device determines that the first zoom ratio is greater than or equal to a first preset ratio, in response to a first photographing operation of the user, the electronic device obtains, by using a long-focus lens, a first moon image based on the first zoom ratio and a first exposure parameter, and obtains a first foreground image based on a second exposure parameter.

For example, the first preset ratio is 10x, 8x, or the like. A specific value of the first preset ratio is not limited in embodiments of this application. In some other examples, the first zoom ratio further needs to be less than a preset ratio B. For example, the preset ratio B is 20x, 25x, or the like.

For example, as shown in FIG. 3(b) to FIG. 3(d), the photographing operation of the user may be an operation of tapping the photographing control 223 by the user. When the mobile phone 200 detects that the user taps the photographing control 223, the mobile phone 200 may obtain the moon image by using the long-focus lens based on a zoom ratio selected by the user, and obtain the foreground image by using the long-focus lens.

It should be understood that, because a difference between the moon image and the foreground image is large when the moon is photographed, when the electronic device performs photographing by using the long-focus lens, the moon image is obtained based on the first exposure parameter, and the foreground image is obtained based on the second exposure parameter.

The exposure parameter may include exposure time, a sensitivity value, exposure compensation, white balance, and the like. The first exposure parameter may be a low exposure parameter, for example, exposure time is long, for example, 10s. The second exposure parameter may be a high exposure parameter.

1340: The electronic device fuses the first moon image and the first foreground image, to obtain a first target image.

It should be understood that, for a specific manner in which the electronic device fuses the first moon image and the first foreground image, refer to the foregoing related descriptions. Details are not described herein again.

In this embodiment of this application, when the electronic device determines to photograph the moon, the electronic device may display, on the primary preview display interface of the camera, the moon image obtained by the long-focus lens, and display, on the auxiliary preview display interface in a picture-in-picture manner, the image obtained by the wide-angle lens. Therefore, when photographing the moon, the user may perform composition on the moon based on the foreground image. This is more helpful for the user to take a photo of the moon with harmonious composition. In addition, when it is determined that the zoom ratio of the electronic device is greater than or equal to the first preset ratio, in a photographing phase, the electronic device obtains the moon image by using the long-focus lens based on a high exposure parameter, obtains the foreground image based on a low exposure parameter, and fuses the moon image and the foreground image to obtain the final target image. This helps the user take a photo of a clear moon subject and foreground scenery.

In some embodiments, the preview display interface further includes a second zoom ratio control, the second zoom ratio control is used to control a second zoom ratio for additionally zooming in the moon based on the first zoom ratio. The displaying, on a primary preview display interface of the preview display interface, a moon image obtained by the long-focus lens includes: displaying, on the primary preview display interface, the first moon image that is zoomed in based on the second zoom ratio. That the electronic device fuses the first moon image and the first foreground image includes: The electronic device fuses the first foreground image and the first moon image that is zoomed in based on the second zoom ratio.

For example, as shown in FIG. 6(a) to FIG. 6(d), the second zoom ratio control may be the moon magnification ratio control 521, and the second zoom ratio may be 2. When the user adjusts the second zoom ratio from 1 to 2, the moon image on the primary preview display interface 525 is correspondingly zoomed in. After the user taps the photographing control 523, the mobile phone 500 may fuse the foreground image and the moon image that is zoomed in based on the second zoom ratio, to obtain a final image.

It should be understood that the second zoom ratio may be the foregoing moon magnification ratio. For details, refer to the foregoing descriptions. For brevity, details are not described again.

In this embodiment of this application, the preview display interface of the camera may further include the second zoom ratio control used to control to zoom in the moon subject based on the first zoom ratio. The moon subject in the primary preview display interface may be zoomed in based on the second zoom ratio. In the photographing phase, the electronic device may fuse the foreground image and the moon image that is zoomed in based on the second zoom ratio, to obtain a final image. In this technical solution, the user can flexibly adjust a size of the moon subject in a same foreground, to help improve flexibility of photographing the moon.

In some embodiments, when the electronic device detects that the user adjusts the first zoom ratio to be less than the first preset ratio, the method 1300 may further include:

In response to a second photographing operation of the user, the electronic device obtains, by using the long-focus lens, a second moon image based on the first zoom ratio, and obtains a first wide-angle image by using the wide-angle lens; and
the electronic device fuses the first wide-angle image and the second moon image that is zoomed in based on the second zoom ratio, to obtain a second target image.

For example, it is assumed that the first preset ratio is 10. As shown in FIG. 9(a) to FIG. 9(c), when the user adjusts the first zoom ratio to 2x, after the user taps the photographing control 626, the mobile phone may obtain, by using the long-focus lens, the second moon image based on the first zoom ratio, obtain the first wide-angle image by using the wide-angle lens, and fuse the first wide-angle image and the second moon image that is zoomed in based on the second zoom ratio, to obtain a final second target image.

In this embodiment of this application, at a high zoom ratio, because definition of the wide-angle lens is poor, an obtained foreground image may be blurry, and is lower than definition of the foreground image obtained by the long-focus lens. Therefore, the foreground image obtained by using the long-focus lens and the moon image obtained by the long-focus lens are fused to obtain a target image in which both the moon subject and the foreground are clear and visible. When the electronic device switches the zoom ratio to a lower ratio, and selects a high moon magnification ratio, the foreground image obtained by the wide-angle lens has a larger size and high definition. The moon image obtained by the long-focus lens and the foreground image obtained by the wide-angle lens are fused, so that a foreground is beautiful and the moon is clear.

In some embodiments, the wide-angle image further includes a first display frame, and the first display frame indicates a framing size of the first target image.

For example, as shown in FIG. 3(b), the wide-angle image may be displayed on the auxiliary preview display interface 230, the first display frame may be the display interface 231, and a size of the display interface 231 is a framing size of the first target image.

In this embodiment of this application, the first display frame is used, so that the user can determine a size of an image obtained by the long-focus lens. This helps the user perform composition on the moon.

In some embodiments, the method 1300 may further include:

In response to an operation of tapping the wide-angle image or a switch button by the user, the electronic device displays, on the auxiliary preview display interface, the moon image obtained by the long-focus lens, and displays the wide-angle image on the primary preview display interface.

In some examples, the switch button may be located in the auxiliary preview display interface or the primary preview display interface.

In this embodiment of this application, the electronic device may support exchange of preview display positions of the display interface of the moon image obtained by the long-focus lens and the display interface of the wide-angle image obtained by the wide-angle lens, so that the user can flexibly switch a preview display interface of the lens when photographing the moon by using the electronic device.

In some embodiments, before the electronic device fuses the first moon image and the first foreground image, the method 1300 may further include:

The electronic device obtains center points of the moon area in the first moon image and the moon area in the first foreground image; and
the electronic device performs moon alignment on the moon area in the first moon image and the moon area in the first foreground image based on the center points of the moon areas.

It should be understood that, because the moon subject is bright, the long-focus lens needs to obtain the moon image in an extremely low exposure manner; brightness of the foreground image is lower than that of the moon, the long-focus lens needs to obtain the foreground image in an extremely high exposure manner; and there may be slight jitter during photographing of the user. Therefore, there may be a slight difference between the moon image and the foreground image for the moon subject. Therefore, alignment needs to be performed on the moon areas after image fusion. In this way, a moon area in the finally obtained image is clearer.

It should be understood that, for a process in which the electronic device performs moon alignment, refer to the foregoing related descriptions. For brevity, details are not described herein again.

In some embodiments, the method 1300 may further include:

After fusing the first moon image and the first foreground image, the electronic device performs suppression on a lens flare of the moon in a fused image.

There is a strong lens flare around the moon subject. In this embodiment of this application, the lens flare may be processed in a manner like filtering or an AI algorithm, so that the lens flare of the moon is natural.

In some embodiments, the displaying, on a primary preview display interface of the preview display interface, a moon image obtained by the long-focus lens, and displaying, on an auxiliary preview display interface of the preview display interface, a wide-angle image obtained by a wide-angle lens includes:

The electronic device performs distribution statistics collection on brightness values of the first foreground image, to obtain a first brightness value; and
displays silhouette effect of an object other than the moon in the first foreground image when it is determined that the first brightness value is less than a preset brightness value.

In a possible implementation, the mobile phone may perform distribution statistics collection on the brightness values of the foreground, to obtain the first brightness value. When it is determined that the first brightness value is less than the preset brightness value, the mobile phone may determine that the foreground is dark, and may display silhouette effect instead of blindly increasing the brightness.

In this way, when the foreground includes a small quantity of objects, for example, the foreground includes only a small quantity of trees, utility poles, and building lights, silhouette effect may be displayed in the foreground on the preview interface of the camera, to improve an artistic aesthetic sense of the obtained image.

In this embodiment of this application, when the foreground includes a small quantity of objects, if foreground brightness is forcibly increased, display effect is poor. In this embodiment of this application, the foreground brightness is not improved, but the objects in the foreground are displayed as silhouette effect, so that a finally obtained image has an artistic aesthetic sense.

In some embodiments, an object other than the moon in the first target image is displayed as silhouette effect.

For example, as shown in FIG. 12(d), in the image 741 finally obtained by the mobile phone, the moon is clear and bright, and the light in the foreground is displayed as silhouette effect.

An embodiment of this application further provides an electronic device, including one or more processors and one or more memories. The one or more memories store one or more computer programs, the one or more computer programs include instructions, and when the instructions are executed by the one or more processors, the moon photographing method in any one of the foregoing possible implementations is performed.

An embodiment of this application further provides a moon photographing apparatus, including a module configured to implement the moon photographing method in any one of the foregoing possible implementations.

An embodiment of this application further provides a chip. The chip includes a processor and a communication interface. The communication interface is configured to receive a signal and transmit the signal to the processor. The processor processes the signal, so that the moon photographing method according to any one of the foregoing possible implementations is performed.

An embodiment further provides a computer-readable storage medium. The computer-readable storage medium stores computer instructions. When the computer instructions are run on an electronic device, the electronic device is enabled to perform the foregoing related method steps to implement the moon photographing method in the foregoing embodiments.

The embodiments further provide a computer program product. When the computer program product is run on a computer, the computer is enabled to perform the foregoing related steps, to implement the moon photographing method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the moon photographing method in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effect in the corresponding methods provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A moon photographing method, wherein the method is applied to an electronic device, the electronic device comprises a wide-angle lens and a long-focus lens, and the method comprises:
displaying, by the electronic device, a preview display interface of a camera, wherein the preview display interface comprises a first zoom ratio control, and the first zoom ratio control is used to control a first zoom ratio of the long-focus lens;
when the electronic device determines that a photographing scene is a moon scene, displaying, on a primary preview display interface of the preview display interface, a moon image obtained by the long-focus lens, and displaying, on an auxiliary preview display interface of the preview display interface, a wide-angle image obtained by the wide-angle lens;
when the electronic device determines that the first zoom ratio is greater than or equal to a first preset ratio, in response to a first photographing operation of a user, obtaining, by the electronic device by using the long-focus lens, a first moon image based on the first zoom ratio and a first exposure parameter, and obtaining a first foreground image based on a second exposure parameter; and
fusing, by the electronic device, the first moon image and the first foreground image, to obtain a first target image.

2. The method according to claim 1, wherein the preview display interface further comprises a second zoom ratio control, the second zoom ratio control is used to control a second zoom ratio for additionally zooming in the moon based on the first zoom ratio, and the displaying, on a primary preview display interface of the preview display interface, a moon image obtained by the long-focus lens comprises:
displaying, on the primary preview display interface, the first moon image that is zoomed in based on the second zoom ratio; and
the fusing, by the electronic device, the first moon image and the first foreground image comprises:
fusing, by the electronic device, the first foreground image and the first moon image that is zoomed in based on the second zoom ratio.

3. The method according to claim 2, wherein when the electronic device detects that the user adjusts the first zoom ratio to be less than the first preset ratio, the method further comprises:
in response to a second photographing operation of the user, obtaining, by the electronic device by using the long-focus lens, a second moon image based on the first zoom ratio, and obtaining a first wide-angle image by using the wide-angle lens; and
fusing, by the electronic device, the first wide-angle image and the second moon image that is zoomed in based on the second zoom ratio, to obtain a second target image.

4. The method according to any one of claims 1 to 3, wherein the wide-angle image further comprises a first display frame, and the first display frame indicates a framing size of the first target image.

5. The method according to any one of claims 1 to 4, wherein the method further comprises:
in response to an operation of tapping the wide-angle image or a switch button by the user, displaying, by the electronic device on the auxiliary preview display interface, the moon image obtained by the long-focus lens, and displaying the wide-angle image on the primary preview display interface.

6. The method according to any one of claims 1 to 5, wherein before the fusing, by the electronic device, the first moon image and the first foreground image, the method further comprises:
obtaining, by the electronic device, center points of a moon area in the first moon image and a moon area in the first foreground image; and
performing, by the electronic device, moon alignment on the moon area in the first moon image and the moon area in the first foreground image based on the center points of the moon areas.

7. The method according to claim 6, wherein the method further comprises:
after fusing the first moon image and the first foreground image, performing, by the electronic device, suppression on a lens flare of the moon in a fused image.

8. The method according to any one of claims 1 to 7, wherein the displaying, on a primary preview display interface of the preview display interface, a moon image obtained by the long-focus lens, and displaying, on an auxiliary preview display interface of the preview display interface, a wide-angle image obtained by the wide-angle lens comprises:
performing, by the electronic device, distribution statistics collection on brightness values of the first foreground image, to obtain a first brightness value; and
when it is determined that the first brightness value is less than a preset brightness value, displaying silhouette effect of an object other than the moon in the first foreground image.

9. The method according to claim 8, wherein an object other than the moon in the first target image is displayed as silhouette effect.

10. An electronic device, comprising one or more processors and one or more memories, wherein the one or more memories store one or more computer programs, the one or more computer programs comprise instructions, and when the instructions are executed by the one or more processors, the moon photographing method according to any one of claims 1 to 9 is performed.

11. A moon photographing apparatus, comprising a module configured to implement the moon photographing method according to any one of claims 1 to 9.

12. A chip, wherein the chip comprises a processor and a communication interface, the communication interface is configured to: receive a signal, and transmit the signal to the processor, and the processor processes the signal, for enabling the moon photographing method according to any one of claims 1 to 9 to be performed.

13. A computer-readable storage medium, wherein the computer-readable storage medium stores computer instructions, and when the computer instructions are run on a computer, the moon photographing method according to any one of claims 1 to 9 is performed.
